# FASCICULE DE BREVET EUROPEEN

(11) **EP 2 877 863 B1**
(45) Date de publication et mention de la délivrance du brevet: **27.10.2021**
(21) Numéro de dépôt: 13756599.0
(22) Date de dépôt: 25.07.2013
(51) Int. Cl.: G01Q 40/00, G02B 21/36

(54) **DISPOSITIF ET PROCEDE DE CARACTERISATION D'UN ECHANTILLON PAR DES MESURES LOCALISEES**
VORRICHTUNG UND VERFAHREN ZUR CHARAKTERISIERUNG EINER PROBE DURCH LOCALISIERTEN MESSUNGEN
DEVICE AND METHOD FOR THE CHARACTERISATION OF A SAMPLE BY LOCALISED MEASURES

(30) Priorité: 27.07.2012 FR 1257331
(43) Date de publication de la demande: 03.06.2015
(73) Titulaire: Horiba France SAS, 91120 Palaiseau (FR)
(72) Inventeur: ACHER, Olivier, 91190 Gif-Sur-Yvette (FR); PODZOROV, Alexander, 91400 Orsay (FR)
(74) Mandataire: Jacobacci Coralis Harle
(86) Numéro de dépôt international: PCT/FR2013/051802
(87) Numéro de publication internationale: WO 2014/016526

(56) Documents cités:
- EP-A1- 0 752 715
- WO-A1-2009/106602
- US-A- 5 117 110

## Description

L'invention concerne un dispositif de caractérisation destiné à mesurer une caractéristique physique d'un échantillon.

L'invention concerne plus particulièrement un dispositif de caractérisation comportant au moins un instrument de mesure et un système de positionnement permettant de positionner de manière absolue l'instrument de mesure par rapport à l'échantillon.

L'invention concerne également un dispositif de caractérisation comportant deux instruments de mesure, le système de positionnement permettant de réaliser des mesures co-localisées sur l'échantillon au moyen des deux instruments de mesure.

Avec l'avènement des nanotechnologies, la capacité d'effectuer des mesures extrêmement précises afin de contrôler la fabrication, le fonctionnement et le vieillissement de différents composants à l'échelle nanométrique est devenue primordiale. Un problème récurrent est alors la « co-localisation » des mesures effectuées avec différents instruments de mesure ou à différents instants de temps.

Par co-localisation des mesures, on entend la possibilité d'effectuer des mesures différentes aux mêmes endroits d'un échantillon.

La co-localisation des mesures nécessite, d'une part, une haute précision spatiale, c'est-à-dire qu'il faut positionner très précisément l'instrument de mesure par rapport à un échantillon à caractériser lors d'une mesure ponctuelle.

Elle nécessite, d'autre part, une haute répétabilité des mesures. Il est en effet essentiel de pouvoir effectuer la même mesure à différents instants et de retrouver le même résultat pour un échantillon stable.

Il est connu du domaine de la métrologie qu'un dispositif de caractérisation d'un échantillon comporte un instrument de mesure adapté à déterminer une caractéristique physique de cet échantillon en un point de celui-ci.

Lors de l'utilisation d'un tel dispositif de caractérisation, il est utile de placer correctement l'échantillon par rapport à l'instrument de mesure afin d'effectuer la mesure en un point particulier de l'échantillon.

Il est connu par exemple du document US 7630628 un dispositif de caractérisation comportant également un système de positionnement permettant de positionner l'instrument de mesure par rapport à l'échantillon à caractériser en un point de mesure localisé de l'échantillon. Le système de positionnement du document US 7630628 comprend notamment une platine porte-échantillon sur laquelle on a déposé l'échantillon, des moyens de pilotage permettant de déplacer cette platine de manière précise et répétable. Ceci permet, si l'échantillon est solidaire de la platine porte-échantillon et si l'échantillon n'est pas manipulé entre deux prises de mesure, d'effectuer deux mesures en deux points de mesure sensiblement identiques.

Cependant, le système de positionnement du document US 7630628 ne permet pas de connaître précisément la position de l'instrument de mesure par rapport à l'échantillon, c'est-à-dire de positionner de manière absolue l'instrument de mesure par rapport à l'échantillon.

Il est par ailleurs connu du document US5117110 A un dispositif de caractérisation comportant un système de positionnement permettant de positionner l'instrument de mesure de manière précise au-dessus d'un point déterminé d'un échantillon à caractériser.

Le document US5117110 A enseigne un dispositif de caractérisation dans lequel le système de positionnement, ici formé d'un microscope optique, est utilisé dans un premier temps, et l'instrument de mesure, comprenant un microscope à effet tunnel (« *scanning tunneling microscope* » en anglais) dans un second temps. Les opérations de positionnement et de mesure ne sont donc pas réalisées simultanément.

Le document EP 0 752 715 A1 enseigne un microscope électronique avec des motifs de localisation que sont utilisés pour calibrer ledit microscope électronique avec l'aide d'un microscope optique.

Un des objectifs de l'invention est de rendre co-localisables des mesures à l'échelle nanométrique pour une grande variété d'instruments de mesure et réaliser ainsi une caractérisation multimodale d'un échantillon, c'est-à-dire l'analyser par des techniques différentes.

Afin de remédier à l'inconvénient précité de l'état de la technique, la présente invention propose un dispositif de caractérisation d'un échantillon permettant de positionner de manière absolue un instrument de mesure par rapport à l'échantillon.

À cet effet, l'invention concerne un dispositif de caractérisation d'un échantillon selon l'objet de la revendication 1. ladite mire de localisation étant gravée sur ou dans l'échantillon au moyen de techniques mécaniques ou photo-lithographiques, ou étant imprimée sur l'échantillon par encrage ou sérigraphie ou comprenant un support souple ou rigide rapporté sur l'échantillon pour rendre ledit support solidaire dudit échantillon à caractériser,

Le dispositif de caractérisation selon l'invention permet donc, grâce à son système de positionnement, de situer le point de mesure localisée dudit échantillon dans un référentiel lié à l'échantillon.

En effet, l'acquisition et l'analyse de l'image d'une partie au moins de la mire de localisation par les moyens d'acquisition et d'analyse d'images du système de positionnement permet de connaître précisément quelle est la position et l'orientation du système d'imagerie optique par rapport à la mire de localisation, et donc par rapport à l'échantillon, la mire de localisation étant rendue solidaire de l'échantillon.

En déterminant par ailleurs, grâce aux moyens de calibration, la position relative de l'instrument de mesure par rapport au système d'imagerie optique, c'est-à-dire la position de l'instrument de mesure dans un référentiel lié au système d'imagerie optique, le système de positionnement peut déterminer, lorsque l'instrument de mesure est positionné pour la mesure en ledit point de mesure localisée, quelle est la position absolue du point de mesure localisée dans un référentiel lié à l'échantillon.

Grâce au dispositif de caractérisation selon l'invention, ni l'échantillon à caractériser, ni la mire de localisation, ne sont déplacés entre le moment où la position du point de mesure localisée est déterminée par le système de positionnement, et le moment où la mesure de l'échantillon est réalisée par l'instrument de mesure. Les opérations de positionnement et de mesure de l'échantillon sont donc réalisées simultanément.

Le système de positionnement permet de positionner l'instrument de mesure en n'importe quel point de mesure localisée de l'échantillon en lisant la position correspondante sur la mire de localisation. Le dispositif de caractérisation permet ainsi de réaliser une cartographie précise d'une partie ou de la totalité de l'échantillon à caractériser.

De plus, le dispositif de caractérisation selon l'invention permet de réaliser avec l'instrument de mesure deux mesures séparées dans le temps sur un échantillon, et ce au même point de mesure localisée, même si l'échantillon a été déplacé par rapport à l'instrument de mesure entre les deux mesures successives.

Le dispositif de caractérisation selon l'invention est de plus particulièrement adapté au cas où l'on souhaite caractériser un même échantillon par deux instruments de mesure différents, que ces deux instruments de mesure effectuent une mesure en un même point de mesure localisée, ou en deux points de mesure localisée distincts.

Ainsi, des modes de réalisation de l'invention concernent egalement:
- un dispositif de caractérisation comportant un autre instrument de mesure adapté à déterminer une autre caractéristique physique dudit échantillon en un point dudit échantillon, ledit système de positionnement étant adapté à positionner ledit autre instrument de mesure par rapport audit échantillon en un deuxième point de mesure localisée dudit échantillon, ledit système d'imagerie optique étant également solidaire dudit autre instrument de mesure, lesdits moyens de calibration dudit système de positionnement étant adaptés à déterminer la position relative dudit autre instrument de mesure par rapport audit système d'imagerie optique, et lesdits moyens de traitement des résultats étant adaptés à déterminer la position absolue dudit deuxième point de mesure localisée dans ledit référentiel lié audit échantillon, ladite autre caractéristique physique dudit échantillon étant déterminée par ledit autre instrument de mesure en ledit deuxième point de mesure ;
- un dispositif de caractérisation comportant un autre instrument de mesure adapté à déterminer une autre caractéristique physique dudit échantillon en un point dudit échantillon, ledit système de positionnement étant adapté à positionner ledit autre instrument de mesure par rapport audit échantillon en un deuxième point de mesure localisée dudit échantillon et comprenant un autre système d'imagerie optique, solidaire dudit autre instrument de mesure, adapté à acquérir une autre image d'au moins une partie de ladite mire de localisation, lesdits moyens d'analyse d'images étant adaptés à analyser ladite autre image de la partie de ladite mire de localisation pour déterminer la position et l'orientation dudit autre système d'imagerie optique par rapport à ladite mire de localisation, lesdits moyens de calibration dudit système de positionnement étant adaptés à déterminer la position relative dudit autre instrument de mesure par rapport audit autre système d'imagerie optique, et lesdits moyens de traitement des résultats étant adaptés à déterminer la position absolue dudit deuxième point de mesure localisée dans ledit référentiel lié audit l'échantillon, ladite autre caractéristique physique dudit échantillon étant déterminée par ledit autre instrument de mesure en ledit deuxième point de mesure, et
- un dispositif de caractérisation comportant un autre instrument de mesure adapté à déterminer une autre caractéristique physique dudit échantillon en un point dudit échantillon, ledit système de positionnement étant adapté à positionner ledit autre instrument de mesure par rapport audit échantillon en un deuxième point de mesure localisée dudit échantillon et comprenant :
   - un autre système d'imagerie optique, solidaire dudit autre instrument de mesure, adapté à acquérir une autre image d'au moins une partie de ladite mire de localisation, lesdits moyens d'analyse d'images étant adaptés à analyser ladite autre image de la partie de la mire de localisation pour déterminer la position et l'orientation dudit autre système d'imagerie optique par rapport à ladite mire de localisation, et
   - d'autres moyens de calibration adaptés à déterminer la position relative dudit autre instrument de mesure par rapport audit autre système d'imagerie optique, lesdits moyens de traitement des résultats étant adaptés à déterminer la position absolue dudit deuxième point de mesure localisée dans ledit référentiel lié audit l'échantillon, ladite autre caractéristique physique dudit échantillon étant déterminée par ledit autre instrument de mesure en ledit deuxième point de mesure.

Ainsi, le dispositif de caractérisation présente l'avantage de proposer un système de positionnement permettant de rendre compatibles entre eux de nombreux instruments de mesure.

De tels dispositifs de caractérisation peuvent être utilisés afin de réaliser des mesures co-localisées au même endroit ou en des endroits distincts sur l'échantillon avec des instruments de mesure différents, séparés dans l'espace et/ou dans le temps.

Le dispositif de caractérisation permet ainsi de coupler de manière virtuelle différentes techniques de mesure mises en œuvre dans différents instruments de mesure. Ceci répond à un besoin de réaliser des études multimodales sur des échantillons.

En outre, le dispositif de caractérisation peut en particulier comporter un instrument de mesure déterminant, lors d'une mesure unique, ladite caractéristique physique de l'échantillon sur une zone étendue sensiblement centrée autour dudit point de mesure localisée.

Parmi les instruments de mesure pouvant être utilisés dans un dispositif de caractérisation tel que décrit précédemment, on peut, par exemple, citer les instruments de mesure suivants :
- microscope optique numérique dans les domaines visible, ultraviolet ou infrarouge, à champ large ou à balayage laser (microscope confocal), à contraste d'absorption, de réflexion, de diffusion élastique ou Raman, de phase, d'interférence, de polarisation ou de fluorescence ;
- microscope à sonde locale (par exemple, microscope à force atomique) ;
- microscope électronique à balayage, en transmission ou à balayage par transmission, spectromètre Auger, spectromètre photoélectronique X ;
- profilomètre mécanique ;
- système d'imagerie par résonance de plasmons de surface ;
- spectromètre de masse ;
- spectromètre d'absorption ou de fluorescence de rayons X ;
- spectromètre de cathodoluminescence.

Par ailleurs, d'autres caractéristiques avantageuses et non limitatives du dispositif de caractérisation sont les suivantes :
- ladite mire de localisation est formée d'une feuille adhésive ;
- ladite mire de localisation est rendue solidaire de la deuxième face d'un échantillon sensiblement plan comportant une première face et une deuxième face, ledit point de mesure localisée étant situé sur ladite première face dudit échantillon ;
- ladite mire de localisation s'étend spatialement sur une zone de localisation plus grande qu'une zone de mesure dudit échantillon destinée à être caractérisée par ledit instrument de mesure ;
- ladite mire de localisation s'étend sur toute la deuxième face dudit échantillon ;
- ladite mire de localisation est fabriquée simultanément avec ledit échantillon ;
- ladite mire de localisation comporte des motifs micro- ou nano-structurés ;
- ladite mire de localisation est formée d'une pluralité de cellules élémentaires formant un pavage régulier à deux dimensions ;
- chaque cellule élémentaire comporte un motif de positionnement indiquant la position de ladite cellule élémentaire dans ledit référentiel lié audit l'échantillon, et un motif d'orientation indiquant l'orientation de ladite cellule élémentaire dans ledit référentiel lié audit l'échantillon ;
- chaque cellule élémentaire comporte des motifs périodiques permettant d'améliorer la précision du positionnement de ladite cellule élémentaire par rapport audit échantillon ;
- chaque cellule élémentaire comporte un motif d'identification codant pour des informations relatives audit échantillon et/ou à ladite mire de localisation ;
- ledit motif d'identification est identique pour chacune desdites cellules élémentaires ;
- ledit système d'imagerie optique est agencé de telle sorte que ladite image de la partie de ladite mire de localisation comporte une image dudit motif de positionnement et dudit motif d'orientation ;
- ledit système d'imagerie optique est agencé de telle sorte que ladite image de la partie de ladite mire de localisation comporte une image desdits motifs périodiques ;
- ledit système d'imagerie optique est agencé de telle sorte que ladite image de la partie de ladite mire de localisation comporte une image dudit motif d'identification.

L'utilisation d'une mire de localisation présentant des motifs micro- ou nano-structurés permet d'atteindre une précision de positionnement de l'instrument de mesure par rapport à l'échantillon inférieure à 0,1 micron (µm). Ceci s'avère particulièrement avantageux, particulièrement pour des instruments de mesure du type microspectromètre Raman, microscope à force atomique, ou microscope électronique par exemple.

L'invention concerne tout particulièrement un dispositif de caractérisation pour un échantillon sensiblement plan comportant une première face et une deuxième face dans lequel :
- ledit instrument de mesure comporte un microscope optique qui comprend un emplacement destiné à recevoir un condenseur lorsque ledit microscope optique est utilisé en trans-illumination,
- ladite mire de localisation est rendue solidaire de ladite deuxième face dudit échantillon, ledit point de mesure localisée étant situé sur ladite première face dudit échantillon, et
- ledit système d'imagerie optique est agencé en lieu et place dudit condenseur.

L'invention concerne enfin un procédé de caractérisation d'un échantillon, au moyen d'un instrument de mesure adapté à déterminer une caractéristique physique en un point dudit échantillon selon l'objet de la revendication 9, comportant des étapes consistant à :
a) déterminer la position relative dudit instrument de mesure par rapport à un système d'imagerie optique, solidaire dudit instrument de mesure,
b) placer l'échantillon à caractériser en conditions pour être mesuré par ledit instrument de mesure en un point de mesure localisée dudit échantillon, une mire de localisation ayant été rendue solidaire dudit échantillon, ladite mire définissant un référentiel lié audit échantillon, ladite mire de localisation étant gravée sur ou dans l'échantillon au moyen de techniques mécaniques ou photo-lithographiques, ou étant imprimée sur l'échantillon par encrage ou sérigraphie ou comprenant un support souple ou rigide rapporté sur l'échantillon pour rendre ledit support solidaire dudit échantillon à caractériser;
c) éclairer ladite mire de localisation et acquérir, au moyen dudit système d'imagerie optique, une image d'au moins une partie de ladite mire de localisation,
d) déterminer, à partir de l'analyse de l'image de ladite partie de la mire de localisation, la position et l'orientation dudit système d'imagerie optique par rapport à ladite mire de localisation, et
e) déduire des étapes a) et d) la position absolue dudit point de mesure localisée dans ledit référentiel lié audit l'échantillon, lorsque ledit instrument de mesure est positionné pour la mesure en ledit point de mesure localisée, de manière à déterminer ladite caractéristique physique dudit échantillon par ledit instrument de mesure en ledit point de mesure localisée.

Des modes de réalisation de l'invention seront décrits en détail en référence aux dessins dans lesquels :
- la figure 1 est une vue schématique d'un dispositif de caractérisation comportant un instrument de mesure et un système de positionnement ;
- la figure 2 est une vue schématique d'un premier mode de réalisation du dispositif de caractérisation comportant un microscope optique comme instrument de mesure ;
- la figure 3 représente une vue schématique de la structure d'une mire de localisation rapportée sur l'échantillon sous forme d'une étiquette ;

- la figure 4 est une vue schématique d'un échantillon comprenant sur sa face inférieure une mire de localisation présentant un agencement régulier de cellules élémentaires ;
- la figure 5 est une vue de détail de quatre cellules élémentaires de la figure 4 comportant des motifs micro-structurés ;
- la figure 6 est une vue schématique d'une cellule élémentaire de la figure 5 ;
- la figure 7 représente une vue schématique de la cellule élémentaire de la figure 6 indiquant comment certaines informations sont codées sur deux zones de cette cellule élémentaire ;
- la figure 8 est une vue de détail de la cellule élémentaire de la figure 6 ;
- la figure 9 est une vue schématique d'un imageur de mire comportant un système d'imagerie optique et des moyens d'éclairage ;
- la figure 10 est une vue schématique d'une matrice de détecteurs et d'un repère-image associé ;
- la figure 11 est une vue schématique d'une image de la mire de localisation de la figure 4 dont une partie est acquise par la matrice de détecteurs de la figure 10 ;
- la figure 12 est une vue de détail de la figure 11 représentant la matrice de détecteurs et l'image d'une partie de la mire de localisation ;
- la figure 13 est une vue de détail de la figure 12 représentant l'image de quelques cellules élémentaires et les repères de la matrice de détecteurs et de la mire de localisation ;
- la figure 14 représente une vue schématique d'un exemple de mire de calibration pouvant être utilisée lors de l'étape de calibration d'un dispositif de caractérisation ;
- la figure 15 représente une vue schématique du dispositif de caractérisation de la figure 1 lors de l'étape de calibration ;
- la figure 16 est une vue schématique d'un deuxième mode de réalisation du dispositif de caractérisation comportant un microscope optique équipé de deux objectifs ;
- la figure 17 est une vue schématique d'un troisième mode de réalisation du dispositif de caractérisation comportant un microscope à force atomique et un microscope optique.

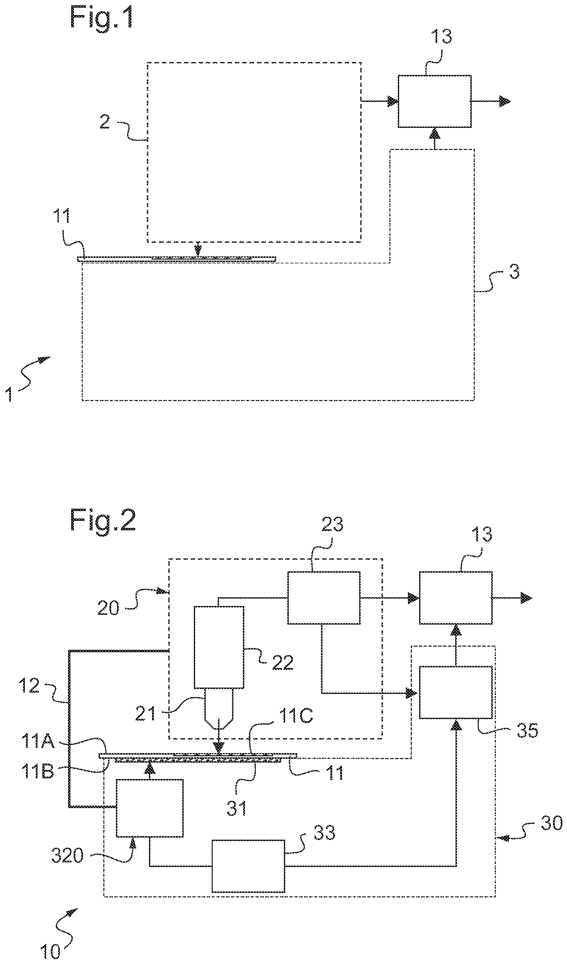

La figure 1 représente une vue schématique d'un dispositif de caractérisation 1 comportant un instrument de mesure 2 et un système de positionnement 3. Le dispositif de caractérisation 1 de la figure 1 sert à caractériser un échantillon 11 placé dans le dispositif.

L'instrument de mesure 2 permet de déterminer une caractéristique physique de l'échantillon 11 en un point de celui-ci.

Le système de positionnement 3 permet de positionner l'instrument de mesure 2 par rapport à l'échantillon 11 à caractériser, l'instrument de mesure 2 effectuant la mesure de la caractéristique physique en un point de mesure localisée de l'échantillon 11.

Le dispositif de caractérisation 1 de la figure 1 comporte également des moyens de traitement des résultats de l'analyse d'images et de la calibration 13 qui déduisent, à partir d'informations reçues de la part de l'instrument de mesure 2 et du système de positionnement 3, la position absolue du point de mesure localisée dans un référentiel lié à l'échantillon 11. La caractéristique physique de l'échantillon 11 est ainsi déterminée par l'instrument de mesure 2 au point de mesure localisée.

On a représenté sur les figures 2, 16 et 17 différents modes de réalisation d'un dispositif de caractérisation 10, 110, 210 destinés à la caractérisation de l'échantillon 11.

Cet échantillon 11 est constitué d'un morceau d'une galette (ou « *wafer »* en anglais) de silicium présentant une zone d'intérêt 11C dans laquelle sont gravés des circuits microélectroniques.

L'échantillon 11 est sensiblement plan et présente une première face 11A et une deuxième face 11B.

Par la suite, nous désignerons face supérieure la première face 11A et face inférieure la deuxième face 11B.

La face supérieure 11A est la face de l'échantillon 11 sur laquelle sont effectuées les mesures réalisées par les différents dispositifs de caractérisation 10, 110, 210.

L'échantillon 11 est de forme carré et présente une largeur de 50 millimètres (mm) et une longueur de 50 mm. Son épaisseur est ici égale à 275 microns (µm).

Les circuits microélectroniques, qui sont gravés sur la face supérieure 11A de l'échantillon 11, au niveau de la zone d'intérêt 11C, ont des tailles caractéristiques de l'ordre de quelques centaines de nanomètres (1 nm = 10⁻³ micron).

Les dispositifs de caractérisation 10, 110, 210 respectivement des figures 2, 16, et 17, comportent chacun un système de positionnement 30 identique.

Le système de positionnement 30 comporte tout d'abord une mire de localisation 31 qui est également sensiblement plane. La mire de localisation 31 comprend notamment un support souple, sous la forme d'une feuille adhésive, rapportée sur l'échantillon 11 pour rendre la mire de localisation 31 solidaire de celui-ci. Par solidaire, on entendra que la mire de localisation 31 ne se déplace pas relativement à l'échantillon 11 lors de sa caractérisation.

Avantageusement, la mire de localisation 31 présente des propriétés dimensionnelles et physiques stables à une échelle de temps de l'ordre de plusieurs mois à quelques années. La mire de localisation 31 est de préférence résistante aux effets de variation de température et d'humidité dans les conditions de laboratoire, et supporte des conditions de vide poussé.

En variante, le système de positionnement pourrait par exemple comporter un porte-échantillon sensiblement plan, avec une face supérieure et une face inférieure. Dans ce cas, l'échantillon peut être fixé sur la face supérieure du porte-échantillon et la mire de localisation peut être fixée sur sa face inférieure.

La mire de localisation 31 se présente sous la forme d'une étiquette autocollante fixée sur la face inférieure 11B de l'échantillon 11.

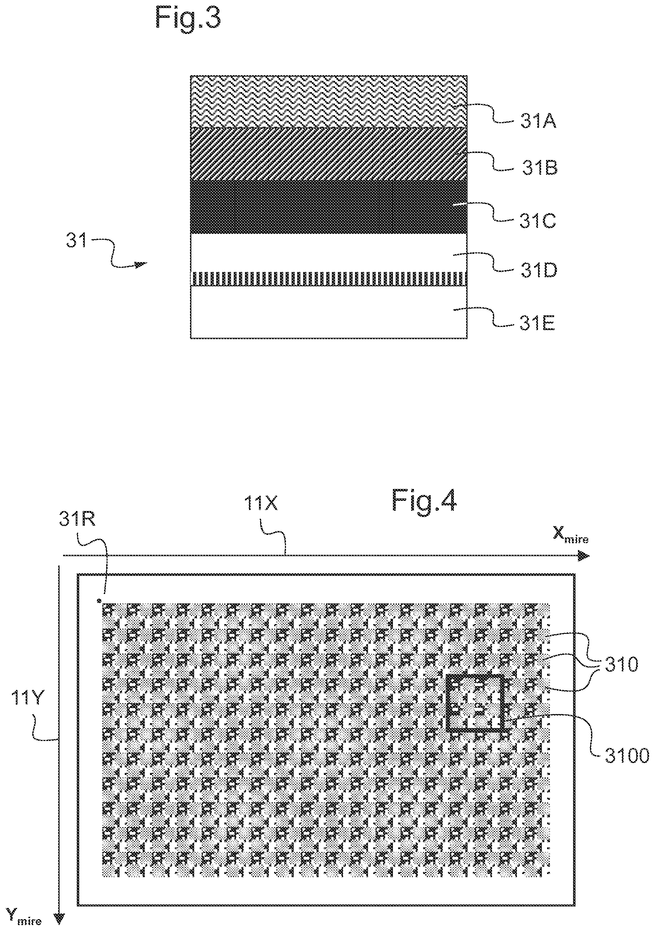

On a représenté sur la figure 3 une vue schématique de la structure transversale de la mire de localisation 31 avec les différentes couches que comprend l'étiquette adhésive, avant que celle-ci ne soit collée sur l'échantillon 11.

L'étiquette adhésive comporte cinq couches 31A, 31B, 31C, 31D et 31E, et son épaisseur totale est ici inférieure à 200 µm.

La première couche 31A est formée d'un film de protection pour la deuxième couche 31B formée par une couche adhésive. Lors du collage de la mire de localisation 31 sur l'échantillon 11, le film de protection 31A est retiré afin de pouvoir appliquer, par pression, la couche adhésive 31B contre la face inférieure 11B de l'échantillon 11. La deuxième couche 31B peut être utilisée pour coller la mire de localisation 31 sur un grand nombre de supports tels que: verre, métal, plastique, cristal, semi-conducteur ou céramique. Le pouvoir d'adhésion de la couche adhésive 31B est telle que la mire de localisation 31 ne se décolle pas de l'échantillon 11 pendant toute la durée de la caractérisation de l'échantillon 11 par le dispositif de caractérisation 10, 110, 210.

La troisième couche 31C est une couche opaque, optiquement occultante pour la lumière dans le domaine visible. Cette couche occultante 31C empêche la lumière de traverser la mire de localisation 31, soit en l'absorbant, soit en la réfléchissant.

La quatrième couche 31D est une couche comportant des motifs et présentant un contraste optique permettant d'encoder certaines informations dans la mire de localisation 31. On verra par la suite la disposition des motifs dans cette couche à contraste optique 31 D.

La cinquième et dernière couche 31E est une couche de protection de la couche à contraste optique 31D. Elle permet de protéger la quatrième couche 31D lors de l'application de la mire de localisation 31 contre la face inférieure 11B de l'échantillon 11. Cette cinquième couche 31E est optiquement transparente dans la gamme de longueurs d'onde pour laquelle la quatrième couche 31D présente un contraste optique., ceci permettant à la couche à contraste optique 31D d'être visible lorsqu'elle est observée à travers la dernière couche 31E.

La cinquième couche 31E est ici optiquement transparente pour la lumière dans le domaine visible.

En variante, la mire de localisation est gravée sur ou dans l'échantillon au moyen de techniques mécaniques ou photo-lithographiques.

En variante encore, la mire de localisation est imprimée sur l'échantillon par encrage ou par sérigraphie.

En variante, la mire de localisation est une lame de microscope en verre, sur laquelle les motifs sont réalisés par photolithographie, l'échantillon étant déposé et/ou collé sur la lame.

On a représenté sur la figure 4 une vue schématique de dessous de l'échantillon 11, faisant apparaître la face inférieure 11B de l'échantillon 11 ainsi que la mire de localisation 31 qui y est collée. La mire de localisation 31 s'étend sur la majeure partie de la face inférieure 11B de l'échantillon 11.

De manière avantageuse, la mire de localisation 31 s'étend spatialement sur une zone de localisation plus grande que la zone d'intérêt 11C qui constitue une zone de mesure de l'échantillon 11 destinée à être caractérisée par le dispositif de caractérisation 10, 110, 210.

En variante, la mire de localisation pourrait par exemple s'étendre sur toute la face inférieure de l'échantillon.

Dans tous les modes de réalisation de l'invention, la mire de localisation 31 comporte une structuration latérale à l'échelle micro- ou nanométrique, avec des motifs micro- ou nano-structurés. Ces motifs correspondent aux motifs de la couche à contraste optique 31D précédemment décrite.

Ainsi, la mire de localisation 31 est ici formée d'une pluralité de cellules élémentaires 310 formant un pavage régulier à deux dimensions, dans le plan de la mire de localisation 31. Les cellules élémentaires 310 sont ainsi périodiquement distribuées le long de deux directions orthogonales 11X, 11Y, ici représentées sur la figure 4 par les axes perpendiculaires entre eux Xₘᵢᵣₑ et Yₘᵢᵣₑ.

On considère par ailleurs le point 31R situé au coin supérieur gauche (voir figure 4) de la mire de localisation 31. Ce point 31R constitue un point de référence fixe de la mire de localisation 31, qui est solidaire de l'échantillon 11. Ce point de référence 31R est donc également un point lié à l'échantillon 11.

Ainsi, le point de référence 31R, les axes 11X et 11Y forment ensemble un référentiel 31R, 11X, 11Y lié à l'échantillon 11, par rapport auquel il est possible de repérer de manière absolue n'importe quel point de cet échantillon 11.

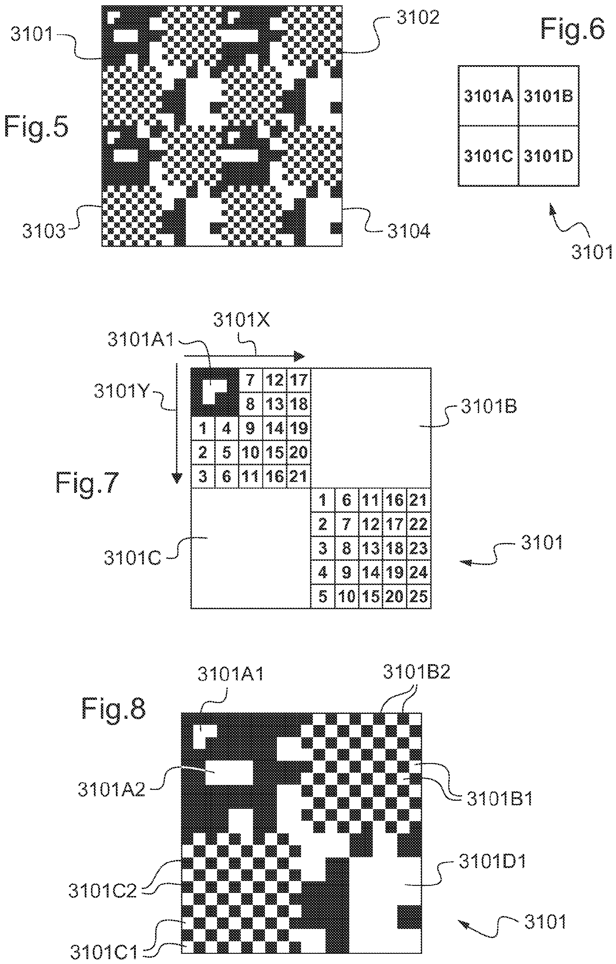

On a représenté sur la figure 5 une vue de détail de quatre cellules élémentaires 3101, 3102, 3103, 3104 de la mire de localisation 31, ces quatre cellules élémentaires 3101, 3102, 3103, 3104 étant celles qui sont repérées sur la figure 4 par le carré noir 3100. Chaque cellule élémentaire 3101, 3102, 3103, 3104 présente ici une forme de carré de 200 µm de côté environ.

De manière préférée, chaque cellule élémentaire 3101, 3102, 3103, 3104 présente des dimensions selon les axes 11X, 11Y comprises entre 40 µm et 1 mm.

Chaque cellule élémentaire 3101, 3102, 3103, 3104 comporte différents motifs micro-structurés dont on va détailler ci-après la fonction.

Pour cela, on considère sur la figure 6 la cellule élémentaire 3101 qui est la cellule située en haut à gauche du carré 3100 de la figure 5.

Cette cellule élémentaire 3101 peut être divisée en quatre sous-cellules distinctes 3101A (sous-cellule en haut à gauche de la cellule élémentaire 3101), 3101B (en haut à droite), 3101C (en bas à gauche), et 3101D (en bas à droite). Chaque sous-cellule 3101A, 3101B, 3101C, 3101D est ici carrée et d'arête 100 µm environ.

### Sous-cellule 3101A (figure 6)

On considère tout d'abord la sous-cellule 3101A de la cellule élémentaire 3101. Cette sous-cellule 3101A peut elle-même être subdivisée en 5 x 5 = 25 sous-sous-cellules tel que cela est représenté sur la figure 7.

Les quatre sous-sous-cellules situées dans le coin supérieur gauche de la sous-cellule 3101A comporte un motif d'orientation 3101A1. Le motif d'orientation 3101A1 a ici une forme d'équerre à angle droit, chaque branche de l'équerre ayant une longueur égale à la taille d'une sous-sous-cellule de la sous-cellule 3101A.

La forme du motif d'orientation 3101A1 confère à celui-ci la propriété géométrique de n'être invariant par aucune rotation dans un plan parallèle au plan de la mire de localisation 31.

Le motif d'orientation 3101A1 est agencé dans les quatre premières sous-sous-cellules de manière à définir deux axes orthogonaux 3101X et 3101Y orientés dans le sens de chacune des branches de l'équerre formant le motif d'orientation 3101A1. Ainsi, le motif d'orientation 3101A1 définit un repère orthogonal lié à la cellule élémentaire 3101.

Dans le cas de la figure 7, les axes orthogonaux 3101X et 3101Y sont chacun parallèles à un côté de la cellule élémentaire 3101, de sorte que les deux axes orthogonaux 3101X et 3101Y sont respectivement parallèles aux deux axes orthogonaux Xₘᵢᵣₑ et Yₘᵢᵣₑ.

Ainsi, le motif d'orientation 3101A1 indique l'orientation de la cellule élémentaire 3101 dans le référentiel 31A, 11X, 11Y lié à l'échantillon 11.

En variante, le motif d'orientation peut être agencé de manière quelconque à l'intérieur d'une cellule élémentaire de sorte que les axes de référence définis par le motif d'orientation ne soient pas parallèles aux côtés de la cellule élémentaire à laquelle il appartient.

On observera par ailleurs sur les figures 4 et 5 que chaque cellule élémentaire 310, 3101, 3102, 3103, 3104 comporte un motif d'orientation identique, de même forme et de même dimension, disposé et orienté de la même manière dans la cellule élémentaire 310, 3101, 3102, 3103, 3104 dans laquelle il se trouve.

Ainsi, les repères orthogonaux définis par les motifs d'orientation des cellules élémentaires 310, 3101, 3102, 3103, 3104 sont tous orientés de la même manière par rapport à la mire de localisation 31. On remarquera en particulier ici que les axes 3101X et 3101Y de la cellule élémentaire 3101 sont respectivement parallèles aux axes 11X et 11Y de la mire de localisation 31 (voir figure 4).

Les vingt-et-une autres sous-sous-cellules de la sous-cellule 3101A codent pour un motif de positionnement 3101A2 dont on détaillera par la suite le principe du codage.

Les vingt-et-une autres sous-sous-cellules de la sous-cellule 3101A sont numérotées de 1 à 21, la numérotation se faisant de haut en bas, et de gauche à droite (cf. figure 7).

Comme cela est visible sur la figure 8, chaque sous-sous-cellule peut être soit blanche (cas des sous-sous-cellules n°1 à 3, 5 à 8, 10, 12 à 17, et 19), soit noire (cas des sous-sous-cellules n°4, 9, 11, 18, 20, et 21). Elles forment ainsi le motif de positionnement 3101 A2.

Ce motif de positionnement 3101A2 indique la position de la cellule élémentaire 3101 dans le référentiel 31A, 11X, 11Y lié à l'échantillon 11.

Pour cela, on affecte à chacune des sous-sous-cellules un chiffre binaire (ou « *bit »* en anglais) selon la convention suivante :
- si la sous-sous-cellule est noire, alors la valeur du bit associé à cette sous-sous-cellule est égale à 0 ;
- si la sous-sous-cellule est blanche, alors la valeur du bit associé à cette sous-sous-cellule est égale à 1.

Ainsi, grâce aux vingt sous-sous-cellules numérotées de 1 à 20, on peut former deux nombres binaires comme suit :
- un premier nombre binaire formé des bits des sous-sous-cellules numérotées de 1 (bit de poids faible) à 10 (bit de poids fort), et
- un deuxième nombre binaire formé des bits des sous-sous-cellules numérotées de 11 (bit de poids faible) à 20 (bit de poids fort).

Le premier nombre binaire code pour la position de la cellule élémentaire 3101 selon l'axe 11X et le deuxième nombre binaire code pour la position de la cellule élémentaire 3101 selon l'axe 11Y.

Le bit de la 21^{ème} sous-sous-cellule (numérotée 21 sur la figure 7) est utilisé pour corriger d'éventuelles erreurs de décodage. Il correspond à la somme des vingt premiers bits (sous-sous-cellules n°1 à 20), c'est-à-dire qu'il vaut « 1 » si cette somme est impaire et qu'il vaut « 0 » si cette somme est paire.

Comme représenté sur la figure 8, le motif de positionnement 3101A2 de la cellule élémentaire 3101 est tel que :
- le premier nombre binaire est 0100001000,
- le deuxième nombre binaire est 1010000001, et
- le 21^{ème} bit est égal à 1 (la somme des vingt premiers bits étant impaire égale à 5).

On remarque sur la figure 5 que le motif de positionnement 3101A2 est différent pour chacune des cellules élémentaires 3101, 3102, 3103, et 3104, de telle sorte qu'il code à chaque fois pour une position différente des cellules élémentaires 3101, 3102, 3103, et 3104 dans le référentiel 31R, 11X, 11Y lié à l'échantillon 11.

### Sous-cellules 3101B et 3101C (figure 6)

Sur la figure 8, on observe que la cellule élémentaire 3101 comporte des motifs périodiques dans chacune des sous-cellules 3101B et 3101C. Celles-ci sont, en effet, formées de damiers de carrés blancs 3101B1, 3101C1 et noirs 3101B2, 3101C2. Chaque damier comprend dix lignes (ou dix colonnes) de dix carrés alternativement blanc ou noir, soit un total de 100 carrés. Chaque carré du damier a ici pour côté 10 µm environ.

De manière préférée, les carrés du damier peuvent avoir des dimensions comprises entre 2 µm et 50 µm.

Comme cela est visible sur les figures 4 et 5, chaque cellule élémentaire 310, 3102, 3103, 3104 comprend deux sous-cellules formées de manière identique aux deux sous-cellules 3101B et 3101C, c'est-à-dire qu'elles ont une structure en damier avec des carrés blancs et des carrés noirs.

On verra par la suite comment ces motifs périodiques permettent d'améliorer la précision du positionnement de l'imageur de mire 320 par rapport à l'échantillon 11.

### Sous-cellule 3101D (figure 6)

La sous-cellule 3101D peut être subdivisée en vingt-cinq sous-sous-cellules tel que cela est représenté sur la figure 7. Ces sous-sous-cellules sont numérotées de 1 à 25, la numérotation se faisant de haut en bas, et de gauche à droite.

Comme pour la sous-cellule 3101A, et comme cela est visible sur la figure 8, chaque sous-sous-cellule peut être soit blanche (cas des sous-sous-cellules n°1 et 2, 5 et 6, 12 à 20, 22, 23, et 25), soit noire (cas des sous-sous-cellules n°3 et 4, 7 à 11, 21 et 24).

Les vingt-quatre premières sous-sous-cellules de la sous-cellule 3101D forment ainsi un motif d'identification 3101D1 représenté sur la figure 8.

Le motif d'identification 3101D1 de la cellule élémentaire 3101 code pour des informations relatives à l'échantillon 11 et à la mire de localisation 31.

En effet, comme pour la sous-cellule 3101A, on forme un ou plusieurs nombres binaires à partir de la valeur des bits associés à chacune de ces sous-sous-cellules de la sous-cellule 3101D. On rappelle que la valeur du bit est égale à 0 si la sous-sous-cellule est noire, ou est égale à 1 si la sous-sous-cellule est blanche.

Dans les modes de réalisation de l'invention, les vingt-quatre premières sous-sous-cellules numérotées de 1 à 24 forment deux nombres binaires comme suit :
- un premier nombre binaire formé des douze bits des sous-sous-cellules numérotées de 1 (bit de poids faible) à 12 (bit de poids fort), et
- un deuxième nombre binaire formé des douze bits des sous-sous-cellules numérotées de 13 (bit de poids faible) à 24 (bit de poids fort).

Le premier nombre binaire code ici pour une référence de l'échantillon 11 et le deuxième nombre binaire code pour la dimension d'un carré du damier des sous-cellules 3101B et 3101C.

Le bit de la 25^{éme} sous-sous-cellule (numérotée 25 sur la figure 7) est également utilisé pour corriger d'éventuelles erreurs de décodage. Il correspond à la somme des vingt-quatre premiers bits (sous-sous-cellules n°1 à 24), c'est-à-dire qu'il vaut 1 si cette somme est impaire et qu'il vaut 0 si cette somme est paire.

Comme représenté sur la figure 8, le motif d'identification 3101D1 de la cellule élémentaire 3101 est tel que :
- le premier nombre binaire est 100000110011,
- le deuxième nombre binaire est 011011111111, et
- le 25^{éme} bit est égal à 1 (la somme des vingt-quatre premiers bits étant impaire égale à 15).

De manière préférée pour les trois modes de réalisation de l'invention, le motif d'identification 3101D1 est identique pour chacune des cellules élémentaires 310 de la mire de localisation 31. On remarque ainsi sur la figure 5 que le motif d'identification 3101D1 est par exemple le même pour chacune des cellules élémentaires 3101, 3102, 3103, et 3104, de telle sorte qu'il code à chaque fois pour les mêmes informations relatives à l'échantillon 11 et à la mire de localisation 31, ici la référence de l'échantillon 11 et la taille d'un carré du damier des sous-cellules B ou C.

En variante, le motif d'identification pourrait par exemple coder pour une référence de la mire de localisation, pour une échelle de la cellule élémentaire, pour un code permettant d'interpréter correctement les informations de localisation de la mire de localisation. On utilise alors les vingt-quatre premières sous-sous-cellules de la sous-cellule associée pour former autant de nombres binaires que nécessaire.

En variante encore, le motif d'identification pourrait par exemple être différent pour chacune des cellules élémentaires de la mire de localisation.

Le système de positionnement 30 des dispositifs de caractérisation 10, 110, 210 comporte également des moyens d'acquisition et d'analyse d'images comprenant un imageur de mire 320 et des moyens d'analyse d'images 33 situés ici du côté de la face inférieure 11B de l'échantillon 11. Ainsi placé, l'imageur de mire 320 fait face à la mire de localisation 31 afin de pouvoir capturer une image d'une partie de la mire de localisation 31.

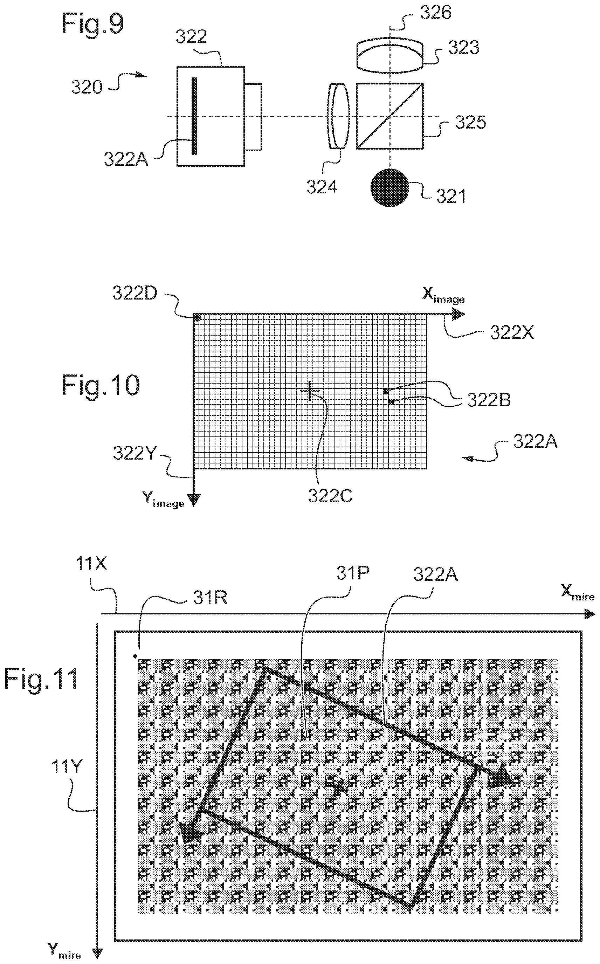

On a représenté sur la figure 9 l'imageur de mire 320 utilisé dans les trois modes de réalisation de l'invention. Cet imageur de mire 320 comprend tout d'abord des moyens d'éclairage 321 permettant d'illuminer la mire de localisation 31. Ces moyens d'éclairage 321 comportent ici :
- une diode électroluminescente émettant un rayonnement visible ou proche infrarouge selon un axe optique 326,
- un cube séparateur 325 transmettant la lumière provenant des moyens d'éclairage 321 en direction de la mire de localisation 31, et
- un premier groupe 323 de lentilles optiques permettant de collimater la lumière provenant des moyens d'éclairage 321 sur la mire de localisation 31 et d'éclairer celle-ci de manière uniforme.

En variante, lorsque l'instrument de mesure du dispositif de caractérisation comporte des sources de lumière, les moyens d'éclairage pourraient par exemple utiliser ces mêmes sources de lumière. Ainsi, avantageusement, lorsque l'instrument de mesure est un microscope optique, les moyens d'éclairage peuvent comprendre une lampe blanche, ou un laser.

Les moyens d'éclairage 321, le cube séparateur 325 et le premier groupe 323 de lentilles sont ici agencés de telle sorte que l'axe optique 326 soit perpendiculaire à la mire de localisation 31.

La lumière incidente (faisceau parallèle à l'axe optique 326) puis réfléchie, diffusée ou diffractée par la mire de localisation 31 peut être mise à profit pour réaliser une image d'une partie de la mire de localisation 31.

À cet effet, l'imageur de mire 320 comprend également :
- un deuxième groupe 324 de lentilles optiques réfractant la lumière réfléchie par le cube séparateur 325, et
- un système d'imagerie optique 322 collectant la lumière réfractée par le deuxième doublet 324.

Le système d'imagerie optique 322 comprend ici une caméra numérique de type CMOS (*Complementary Metal Oxide Semiconductor* en anglais) avec une matrice plane 322A de détecteurs monochromes.

La figure 10 représente une vue de détail de la matrice plane 322A de détecteurs. Celle-ci comprend une matrice rectangulaire de 640 x 480 pixels 322B, avec une période de 6 µm dans les deux directions suivant les lignes et les colonnes de la matrice de détecteurs 322A.

Les 640 x 480 pixels 322B de la matrice de détecteurs 322A sont arrangés de manière régulière de sorte que l'on peut définir deux axes orthogonaux X_{image} 322X et Y_{image} 322Y comme suit (voir figure 10) :
- l'axe X_{image} 322X est orienté parallèlement aux lignes de pixels de la matrice de détecteurs 322A, et
- l'axe Y_{image} 322Y est orienté parallèlement aux colonnes de pixels de la matrice de détecteurs 322A.

On peut alors définir un repère-image de la matrice de détecteurs 322A en considérant le premier pixel 322D, situé au niveau de la 1^{ère} ligne et de la 1^{ère} colonne de la matrice de détecteurs 322A, comme l'origine de ce repère-image, les deux axes orthogonaux X_{image} 322X et Y_{image} 322Y formant une base orthogonale de ce repère-image. On verra par la suite que l'orientation du système d'imagerie optique 322 par rapport à la mire de localisation 31 pourra être définie au moyen des axes orthogonaux X_{image} 322X et Y_{image} 322Y.

La matrice de détecteurs 322A comprend enfin un centre-image 322C situé en son centre (voir figure 10). On verra ci-après que la position du système d'imagerie optique 322 par rapport à la mire de localisation 31 pourra être définie grâce à ce centre-image 322C.

Le système d'imagerie optique 322 de l'imageur de mire 320 acquiert une image 31P d'au moins une partie de la mire de localisation 31, cette image 31P se formant dans le plan de la matrice de détecteurs 322A.

Le champ objet du système d'imagerie optique 322 ne couvrant pas ici toute la mire de localisation 31, la partie de la mire de localisation 31 qui est imagée par le système d'imagerie optique 322 est (voir figure 11) la partie délimitée par le rectangle noir représentant la matrice de détecteurs 322A.

On peut constater sur la figure 11 que, d'une part, le centre-image 322C de la matrice de détecteurs 322A n'est pas situé au centre de la mire de localisation 31, et que, d'autre part, les axes orthogonaux X_{image} 322X et Y_{image} 322Y ne sont ni l'un ni l'autre orientés de telle sorte qu'ils soient parallèles à l'un des axes orthogonaux Xₘᵢᵣₑ 11X ou Yₘᵢᵣₑ 11Y de la mire de localisation 31.

En effet, sans précaution particulière concernant la disposition de l'imageur de mire 320 par rapport à la mire de localisation 31 autre que celle d'illuminer celle-ci de manière adéquate, le système d'imagerie optique 322 présente une position et une orientation quelconques par rapport à la mire de localisation 31.

Pour déterminer la position et l'orientation du système d'imagerie optique 322 par rapport à la mire de localisation 31, le système de positionnement 30 comporte en outre des moyens d'analyse d'images 33 qui analysent l'image 31P de la partie de la mire de localisation 31 acquise par le système d'imagerie optique 322.

On décrira ci-après comment les moyens d'analyse d'images 33 exploitent l'image 31P acquise ainsi que les informations particulières codées dans les cellules élémentaires 310 de la mire de localisation 31 pour effectuer cette détermination.

### Détermination de la position et l'orientation du système d'imagerie optique par rapport à la mire de localisation

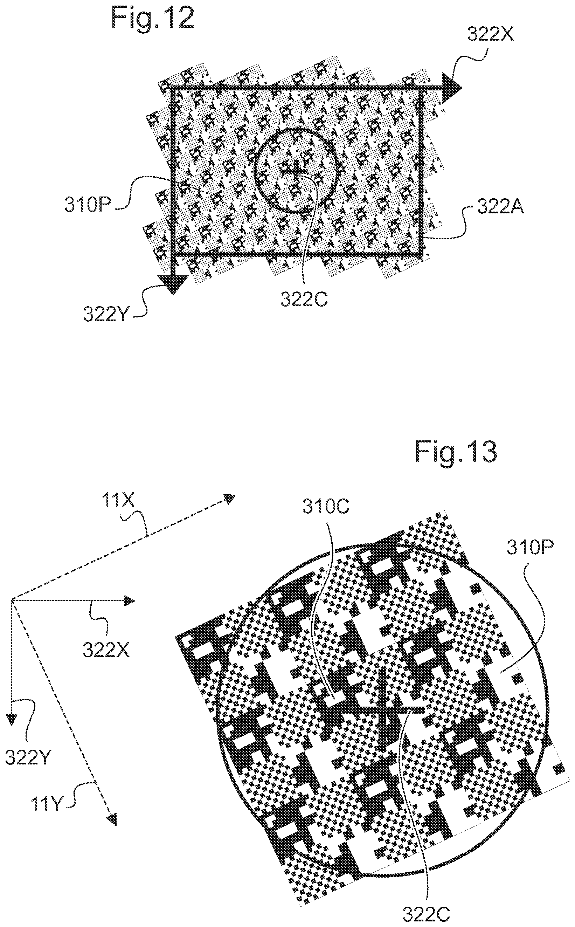

On a représenté sur la figure 12 l'image 31P de la partie de la mire de localisation 31 acquise par le système d'imagerie optique 322. Cette image 31P de la partie de la mire de localisation 31 comprend les images 310P de plusieurs cellules élémentaires 310 de la mire de localisation 31.

En particulier ici, le système d'imagerie optique 322 est agencé de manière avantageuse de telle sorte que l'image 31P de la partie de la mire de localisation 31 comporte :
- une image d'un motif de positionnement et d'un motif d'orientation,
- une image des motifs périodiques formant des sous-cellules, et
- une image d'un motif d'identification.

L'image 31P de la partie de la mire de localisation 31 est analysée par les moyens d'analyse d'images 33 du système de positionnement 30. Par des techniques classiques de reconnaissance de formes, les moyens d'analyse d'images 33 identifient tous les motifs d'orientation présents dans l'image 31P et déterminent l'orientation commune de chacun d'eux par rapport aux deux axes X_{image} 322X et Y_{image} 322Y.

Ceci peut être compris à la lumière de la figure 13 où l'on a représenté une vue agrandie de l'image 31P de la partie de la mire de localisation 31 dans la zone définie par le cercle noir de la figure 12. On a également représenté sur la figure 13, les deux axes orthogonaux X_{image} 322X et Y_{image} 322Y attachés à la matrice de détecteurs 322A du système d'imagerie optique 322.

À partir de l'identification des motifs d'orientation, les moyens d'analyse d'images 33 déterminent que la mire de localisation 31 est orientée selon les deux autres axes orthogonaux Xₘᵢᵣₑ 11X et Yₘᵢᵣₑ 11Y, tels que représentés sur la figure 13.

Les moyens d'analyse d'images 33 déterminent donc que :
- le système d'imagerie optique 322 est orienté suivant les deux axes orthogonaux X_{image} 322X et Y_{image} 322Y et,
- la mire de localisation 31 est orientée selon les deux axes orthogonaux Xₘᵢᵣₑ 11X et Yₘᵢᵣₑ 11Y.

Ainsi, par comparaison, les moyens d'analyse d'images 33 déterminent l'orientation du système d'imagerie optique 322 par rapport à la mire de localisation 31.

Dans le cas représenté sur la figure 13, cette orientation relative peut être, par exemple, simplement quantifiée par la mesure de l'angle orienté entre l'axe X_{image} 322X et l'axe Xₘᵢᵣₑ 11X.

De la même manière, les moyens d'analyse d'images 33 déterminent la position du système d'imagerie optique 322 par rapport à la mire de localisation 31. Pour cela, les moyens d'analyse d'images 33 déterminent la position du centre-image 322C grâce à l'analyse de l'image 31P de la partie de la mire de localisation 31.

Les moyens d'analyse d'images 33 identifient en particulier la cellule élémentaire centrale 310C contenant le centre-image 322C. Les moyens d'analyse d'images 33 décodent alors le motif de positionnement de la cellule élémentaire centrale 310C afin de déterminer un premier positionnement du centre-image 322 par rapport à la mire de localisation 31.

Les moyens d'analyse d'images 33 identifient également par reconnaissance de forme le motif de positionnement de la cellule élémentaire centrale 310C et en déduisent les valeurs du premier nombre binaire qui code pour la position de la cellule élémentaire centrale 310C selon l'axe 11X et du deuxième nombre binaire qui code pour la position de la cellule élémentaire centrale 310C selon l'axe 11Y.

Les moyens d'analyse d'images 33 déterminent alors un second positionnement du centre-image 322 par rapport à la mire de localisation 31. Ce second positionnement, plus précis, est réalisé au moyen des sous-cellules comportant les motifs périodiques en damiers de la cellule élémentaire centrale 310C.

En effet, par des techniques classiques de traitement d'images, les moyens d'analyse d'images 33 permettent un positionnement sub-pixel de ces sous-cellules, c'est-à-dire que, par exemple, la position de chacune de ces sous-cellules est déterminée avec une précision meilleure que le 3/100^{ème} de pixel. Pour cela, le grandissement de l'imageur de mire 320 est choisi de telle sorte que chaque carré des damiers couvre une surface équivalente à environ six à douze pixels.

Ainsi, les motifs périodiques des sous-cellules permettent d'améliorer la précision du positionnement du centre-image 322C par rapport à la mire de localisation 31.

Par la même, ces motifs périodiques permettent d'améliorer la précision du positionnement du système d'imagerie optique 322 par rapport à l'échantillon 11.

Pour résumer, les moyens d'analyse d'image 33 déterminent à partir de l'image 31P d'une partie de la mire de localisation 31 :
- l'orientation du système d'imagerie optique 322 par rapport à la mire de localisation 31 grâce à l'identification des motifs d'orientation des différentes cellules élémentaires 310 présentes dans l'image 31P, et
- la position du système d'imagerie optique 322 par rapport à la mire de localisation 31 grâce à la lecture du motif de positionnement de la cellule élémentaire centrale 310C et au positionnement sub-pixel des sous-cellules de la cellule élémentaire centrale 310C qui comprennent des motifs périodiques.

Les différents modes de réalisation du dispositif de caractérisation décrits ci-après comportent tous un système de positionnement qui comprend une mire de localisation 31 et des moyens d'acquisition et d'analyse d'images tels que ceux décrits précédemment.

### 1^{er} mode de réalisation

Dans le premier mode de réalisation représenté sur la figure 2, le dispositif de caractérisation 10 comporte un instrument de mesure qui est un microscope optique numérique 20.

Selon l'invention, l'instrument de mesure 20 et le système d'imagerie optique 322 sont solidaires l'un de l'autre. On entend par là qu'il existe un couplage mécanique entre eux, c'est-à-dire que tout déplacement de l'instrument de mesure 20 dans un plan sensiblement parallèle à l'échantillon 11 entraîne un déplacement identique du système d'imagerie optique 322 par rapport à l'échantillon 11.

Ceci est représenté sur la figure 2 par le trait plein 12 entre le microscope optique 20 et l'imageur de mire 320 du système de positionnement 30.

De manière avantageuse ici, le système d'imagerie optique 322 est agencé en lieu et place du condenseur du microscope optique 20.

Le microscope optique numérique 20 comprend par ailleurs :
- un objectif 21 de grossissement X10 permettant d'imager une partie de la zone d'intérêt 11C de l'échantillon 11, et
- une caméra numérique 22 permettant d'acquérir une image de la partie de la zone d'intérêt 11C.

On considérera ici que l'instrument de mesure 20 détermine le contraste optique de l'échantillon 11 sur sa zone d'intérêt 11C. Lors d'une mesure unique, le contraste optique de l'échantillon 11 est mesuré sur une zone étendue sensiblement centrée autour d'un point de mesure localisée. Ce point de mesure localisée est ici le centre-image 322C de l'image 31P acquise par le microscope optique numérique 20.

L'instrument de mesure 20 comprend également des moyens de traitement d'images 23 permettant de déterminer le contraste optique sur l'ensemble de l'image numérique d'une partie de la zone d'intérêt 11C de l'échantillon 11 qui est acquise par la caméra numérique 22. Les moyens de traitement d'images 23 déterminent notamment le contraste optique au point de mesure localisée de l'échantillon 11.

Ainsi, le dispositif de caractérisation 10 comporte :
- un instrument de mesure 20 permettant de déterminer le contraste optique de l'échantillon 11 en un point de mesure localisée de l'échantillon 11, et
- un système de positionnement 30 permettant de déterminer la position et l'orientation du système d'imagerie optique 322 par rapport à la mire de localisation 31, et donc par rapport à l'échantillon 11 qui lui est solidaire.

En outre, afin de déterminer la position relative de l'instrument de mesure 20 par rapport au système d'imagerie optique 322, le système de positionnement 30 du dispositif de caractérisation 10 comportent également des moyens de calibration.

Ces moyens de calibration comprennent tout d'abord une fine lame de verre 34 telle que celles utilisées classiquement en microscopie optique. Cette lame de verre 34 comprend une mire de calibration 34A gravée sur la face supérieure de la lame de verre 34 par des techniques classiques de photolithographie permettant d'atteindre des résolutions de gravure submicronique.

La mire de calibration 34A présente avantageusement une structure similaire à la mire de localisation 31 fixée sur l'échantillon 11. De façon préférée, la mire de calibration 34A est semi-transparente : par exemple des motifs apparaissant noirs sont opaques sur un fond au moins partiellement transparent.

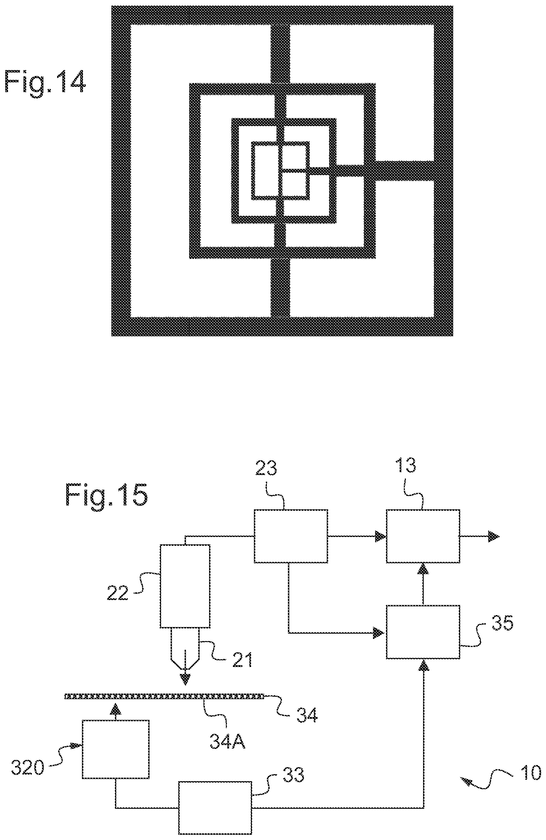

En variante, la mire de calibration pourrait par exemple comprendre une balise multimodale multi-échelle telle que celle représentée sur la figure 14. Il s'agit d'une structure auto-similaire, ne présentant aucune symétrie de rotation et observable par plusieurs techniques instrumentales. Une telle mire de calibration peut être réalisée par un dépôt métallique sur une lame de verre, lui conférant, d'une part un contraste suffisant pour être observée par microscopie optique avec différents grossissements et par microscopie électronique, et, d'autre part, une structure topographique observable au moyen d'un microscope à force atomique. La position de cette balise peut être connue précisément soit parce qu'elle fait partie du motif de localisation et a été fabriqué simultanément avec celui-ci, dans ce cas, elle peut par exemple remplacer le motif d'identification d'une cellule élémentaire connue ; soit parce qu'elle est déposée ultérieurement sur un support comportant une mire de calibration et sa position est mesurée à l'aide d'un instrument de mesure déjà calibré, par exemple, un microscope optique numérique de faible grossissement.

Lors d'une étape de calibration, la lame de verre 34 est disposée dans le dispositif de caractérisation 10 de la même manière que l'échantillon 11. Cette situation est représentée sur la figure 15.

La lame de verre 34 ainsi disposée dans le dispositif de caractérisation 10, la mire de calibration 34A peut être observée simultanément des deux côtés et imagée du dessus par le microscope optique numérique 20 et du dessous par l'imageur de mire 320.

D'un côté, les moyens d'analyse d'images 33 du système de positionnement 30 déterminent, de la même manière qu'avec la mire de localisation 31, la position et l'orientation du système d'imagerie optique 322 par rapport à la mire de calibration 34A, c'est-à-dire dans un référentiel lié à la mire de calibration 34A.

D'un autre côté, les moyens de traitement d'images 23 de l'instrument de mesure 20 déterminent, également de la même manière, la position et l'orientation de l'instrument de mesure 20 par rapport à la mire de calibration 34A, c'est-à-dire dans le même référentiel lié à la mire de calibration 34A.

En variante, si une balise multimodale multi-échelle est employée, il convient de l'observer à l'aide de l'instrument de mesure. Les techniques classiques de traitement d'images permettent alors de déterminer sa position et son orientation exactes.

Les moyens de calibration comprennent également des moyens de traitement de données 35 auxquels sont transmis :
- par les moyens d'analyse d'images 33: la position et l'orientation du système d'imagerie optique 322 dans le référentiel lié à la mire de calibration 34A, et
- par les moyens de traitement d'images 23: la position et l'orientation de l'instrument de mesure 20 dans le référentiel lié à la mire de calibration 34A.

Les moyens de traitement de données 35 déterminent alors la position relative de l'instrument de mesure 20 par rapport au système d'imagerie optique 322. Cette position relative correspond au décalage vectoriel dans le référentiel lié au système d'imagerie optique 322 entre le point de mesure localisée de la mire de calibration 34A observé par l'instrument de mesure 20 et le centre-image 322C du système d'imagerie optique 322.

Les moyens de traitement de données 35 comprennent des moyens de stockage de données permettant d'enregistrer cette position relative afin que celle-ci puisse être exploitée ultérieurement par le dispositif de caractérisation 10.

Pour mieux comprendre le fonctionnement du premier mode de réalisation du dispositif de caractérisation 10, on décrira donc ci-après le procédé de caractérisation selon l'invention permettant de caractériser la galette de silicium 11 constituant l'échantillon.

### Procédé de caractérisation

### a) Calibration

Un opérateur dispose la mire de calibration 34 dans le dispositif de caractérisation 10 de sorte que celle-ci puisse être observée sur ses deux faces, d'un côté par le microscope optique 20 et de l'autre côté par le système d'imagerie optique 322.

Le microscope optique 20 acquiert une première image d'une partie de la mire de calibration 34 qui est traitée par les moyens de traitement d'images 23 pour déterminer la position et l'orientation du microscope optique 20 par rapport à la mire de calibration 34A.

Le système d'imagerie optique 322 acquiert une deuxième image d'une partie de la mire de calibration 34 qui est analysée par les moyens d'analyse d'images 33 pour déterminer la position et l'orientation du système d'imagerie optique 322 par rapport à la mire de calibration 34A.

Les moyens de traitement de données 35 déterminent alors la position relative du microscope optique 20 par rapport au système d'imagerie optique 322.

### b) Mise en place de l'échantillon

L'opérateur se procure la galette de silicium 11 à caractériser et fixe par collage la mire de localisation 31 sur la face inférieure 11B de la galette de silicium 11. La mire de localisation 31 est ainsi rendue solidaire de l'échantillon 11. La mire de localisation 31 est du type de celle représentée sur la figure 4. Par ces motifs, cette mire de localisation 31 définit un référentiel lié à l'échantillon 11.

L'opérateur place ensuite la galette de silicium 11 dans le dispositif de caractérisation 10 pour la mesure. Le microscope optique 20 acquiert une image d'une partie de la zone d'intérêt 11C de la galette de silicium, cette image étant centrée au point de mesure localisée. Cette image de la partie de la zone d'intérêt 11C traitée par les moyens de traitement d'images 23 qui déterminent alors la valeur du contraste optique de l'échantillon 11 au point de mesure localisée.

### c) Acquisition d'une image de la mire de localisation

L'imageur de mire 320 éclaire la mire de localisation 31 grâce aux moyens d'éclairage 321 et le système d'imagerie optique 322 acquiert une image d'au moins une partie de la mire de localisation 31.

### d) Analyse de l'image acquise

L'image acquise précédemment par le système d'imagerie optique 322 est analysée par les moyens d'analyse d'images 33 qui déterminent alors la position et l'orientation du système d'imagerie optique 322 par rapport à la mire de localisation 31.

### e) Détermination de la position du point de mesure

Les moyens d'analyse d'images 33 transmettent aux moyens de traitement de données 35 la position et l'orientation du système d'imagerie optique 322 par rapport à la mire de localisation 31, c'est-à-dire dans le référentiel lié à la galette de silicium 11.

Le dispositif de caractérisation 10 comportent en outre des moyens de traitement des résultats de l'analyse d'images et de la calibration 13 auxquels sont transmis, d'une part, le résultat de la mesure du contraste optique au point de mesure localisée par les moyens de traitement d'images 23, et, d'autre part, la position relative du microscope optique 20 par rapport au système d'imagerie optique 322 par les moyens de traitement de données 35.

Les moyens de traitement des résultats de l'analyse d'images et de la calibration 13 en déduisent alors la position absolue du point de mesure localisée dans le référentiel lié à l'échantillon 11.

Ainsi, l'opérateur du dispositif de caractérisation 10 connaît à la fin de la procédure de caractérisation :
- la valeur du contraste optique de l'échantillon 11 au point de mesure localisée, et
- la position absolue du point de mesure localisée dans un référentiel lié à l'échantillon 11.

### 2^{éme} mode de réalisation

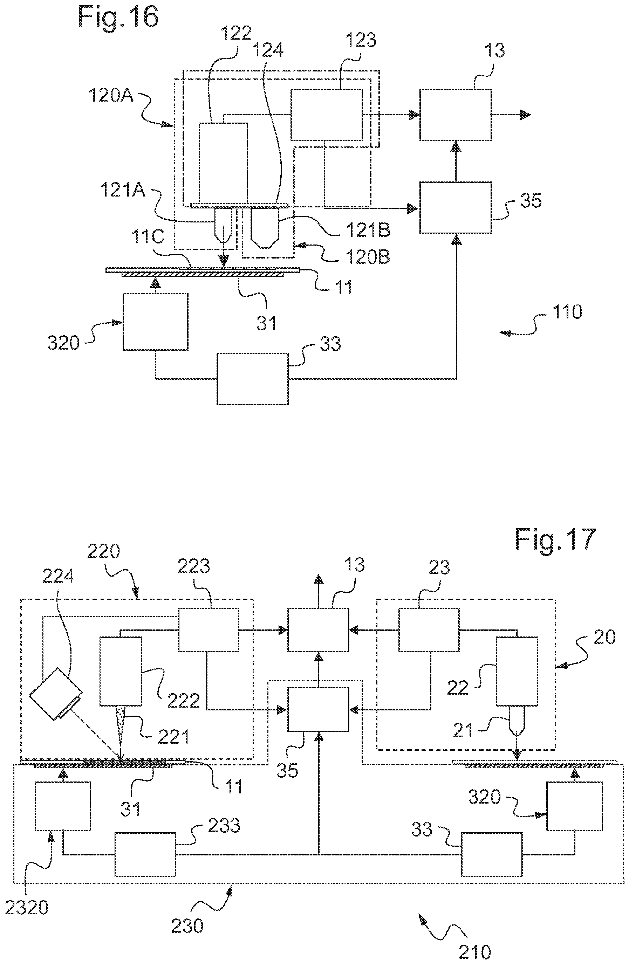

On a représenté sur la figure 16 un deuxième mode de réalisation du dispositif de caractérisation 110 selon l'invention.

Dans ce deuxième mode de réalisation, le dispositif de caractérisation 110 comporte tout d'abord un premier instrument de mesure 120A (voir tirets sur la figure 16) comprenant une platine tournante 124, un premier objectif 121A de grossissement X10 fixé sur la platine tournante 124, une caméra numérique 122, et des moyens de traitement d'images 123.

Le dispositif de caractérisation 110 comporte également un deuxième instrument de mesure 120B (voir tirets pointillés sur la figure 16). Ce deuxième instrument de mesure 120B partage avec le premier instrument de mesure 120A la platine tournante 124, la caméra numérique 122 et les moyens de traitement d'images 123.

Le deuxième instrument de mesure 120B comprend par ailleurs un deuxième objectif 121B de grossissement X50 fixé sur la platine tournante 124.

La platine tournante 124 peut tourner dans son plan ce qui permet à opérateur utilisant le dispositif de caractérisation 110 de sélectionner quel objectif utiliser lors d'une mesure.

Dans ce deuxième mode de réalisation, le dispositif de caractérisation 110 comporte un système de positionnement 30 identique à celui du premier mode de réalisation et fonctionnant de la même manière pour déterminer la position du système d'imagerie optique 322 par rapport à la mire de calibration 31 solidaire de l'échantillon 11.

Un opérateur voulant étudier l'échantillon 11 au moyen des premier et deuxième instruments de mesure 120A, 120B équipés respectivement des deux objectifs 121A, 121B, par exemple pour effectuer une mesure située au même point de mesure localisée de l'échantillon 11 mettra en œuvre deux fois le procédé de caractérisation précédemment décrit pour le premier mode de réalisation.

Avantageusement, l'opérateur pourra conduire les étapes de calibration des deux objectifs 121A et 121B l'une après l'autre, avant d'effectuer les prises de mesure successives aux moyens de ces deux objectifs 121A, 121B.

Dans le cas où les axes optiques entre les deux objectifs 121A, 121B sont décalés de quelques dizaines de microns, la même procédure de calibration ne pourrait plus être effectuée, le champ de vue de la caméra numérique 122 des instruments de mesure 120A, 120B étant alors trop réduit.

La calibration peut être effectuée avec le même échantillon de calibration (la lame de verre de la figure 15, avec sa mire de calibration), en faisant attention d'avoir dans le champ de vue de la caméra numérique une image de la mire de calibration où le motif d'orientation est visible. En acquérant et en enregistrant une image issue de la caméra numérique du microscope optique, on effectue la recherche du motif d'orientation (manuellement ou automatiquement) et on détermine sa position relative par rapport au centre de l'image, ainsi que son orientation. En faisant l'hypothèse d'être resté dans la même zone de la mire de calibration, dont la position absolue a été déterminée lors de la première calibration, on peut remonter à la position absolue et à l'orientation du champ de vue du microscope optique à fort grossissement.

En variante, la balise multimodale multi-échelle décrite précédemment (voir Figure 14) peut être utilisée. Dans ce cas, il n'est plus nécessaire de supposer un décalage petit entre les différents objectifs du microscope optique.

Il peut donc être avantageux de disposer l'imageur de mire de sorte que son centre d'observation, c'est-à-dire le centre-image du système d'imagerie optique coïncide ou soit assez proche du point de mesure de l'instrument de mesure ou du centre de son champ d'observation.

### 3^{ème} mode de réalisation

On a représenté sur la figure 17 un troisième mode de réalisation du dispositif de caractérisation 210 selon l'invention.

Dans ce troisième mode de réalisation, le dispositif de caractérisation 210 comporte deux instruments de mesure : un microscope optique numérique 20 et un microscope à force atomique 220 (désigné ci-après AFM pour « *Atomic Force Microscope* » en anglais).

Le microscope optique numérique 20 est identique à celui utilisé dans le premier mode de réalisation (voir figure 2) : il comprend un objectif 21, une caméra numérique 22 et des moyens de traitement d'images 23 pour traiter les images acquises par la caméra numérique 22.

L'AFM 220 comprend une pointe 221, un amplificateur 222 et des moyens de traitement du signal 223 traitant le signal sortant de l'amplificateur 222. L'AFM comprend également un dispositif de visualisation 224 permettant d'acquérir une image de la zone sondée par la pointe 221 de l'AFM 220. Le dispositif de visualisation 224 comprend ici une caméra vidéo fournissant une image de l'échantillon 11 sous faible grandissement.

Dans ce troisième mode de réalisation, le système de positionnement 230 du dispositif de caractérisation 210 comprend :
- un premier imageur de mire 320, comprenant un premier système d'imagerie optique (non représenté) et associé à des premiers moyens d'analyse d'images 33 ;
- un deuxième imageur de mire 2320, comprenant un deuxième système d'imagerie optique (non représenté) et associé à des deuxièmes moyens d'analyse d'images 233.

Bien que cela ne soit pas schématisé sur la figure 17, dans ce troisième mode de réalisation, d'une part, le premier système d'imagerie optique est solidaire du microscope optique numérique 20 et, d'autre part, le deuxième système d'imagerie optique est solidaire de l'AFM 220.

Les premier et deuxième imageurs de mire 320, 2320, associés respectivement aux premiers et deuxièmes moyens d'analyse d'images 33, 233 fonctionnent de la même manière que pour les deux précédents modes de réalisation.

En particulier, lors d'une étape de calibration ou d'une étape de mesure, ils déterminent et transmettent aux moyens de traitement de données 35 la position et l'orientation des premier et deuxième systèmes d'imagerie optique par rapport à la mire qu'ils observent (une mire de calibration lors d'une calibration et une mire de localisation lors d'une mesure).

Dans ce troisième mode de réalisation, la procédure de calibration du système de positionnement 30 est réalisée séparément avec chacun des deux imageurs de mire 320, 2320 afin de déterminer, d'une part, la position relative du premier instrument de mesure 20 par rapport au premier système d'imagerie optique, et, d'autre part, la position relative du deuxième instrument de mesure 220 par rapport au deuxième système d'imagerie optique.

En particulier, la calibration de la pointe 221 s'effectue de la même manière que celle d'un objectif optique à fort grossissement (voir le 2^{éme} mode de réalisation). On effectue une mesure topographique AFM de la surface d'un échantillon de calibration tel que la lame de verre munie de sa mire de calibration afin de retrouver la position et l'orientation du motif d'orientation.

Dans le cas d'un microscope à force atomique, en procédant de la même manière que dans le cas d'un microscope optique numérique, on peut ainsi effectuer la calibration du dispositif de visualisation 224.

Dans un mode de réalisation alternatif, les moyens de calibration pour le microscope à force atomique et pour le microscope optique peuvent être différents.

Une fois la calibration de chacun des instruments de mesure 20, 220 terminée, le dispositif de caractérisation 210 peut procéder aux mesures sur l'échantillon 11.

Grâce à ce troisième mode de réalisation, il est possible d'étudier la galette de silicium 11 au moyen de deux instruments de mesure très différents. Il est en particulier possible de caractériser cet échantillon 11 en un même point de mesure localisée par deux techniques différentes.

En résumé, les dispositifs de caractérisation sont tous équipés d'un système d'imagerie optique qui observe en permanence une mire de localisation solidaire de l'échantillon à l'étude. En interprétant l'image de la mire de localisation, le système de positionnement permet de déduire la position absolue de l'endroit d'observation dans le repère de l'échantillon lui-même. Le système de positionnement permet de reproduire le point d'observation lors du transfert de l'échantillon d'un instrument de mesure à un autre ou lors d'observations successives mais séparées dans le temps à l'aide du même instrument de mesure.

Un avantage de l'invention est de rendre co-localisables les mesures à l'échelle nanométrique pour une grande variété d'instruments de mesure.

## Revendications

1. Dispositif de caractérisation (1,10, 110, 210) d'un échantillon (11) comportant :
- un instrument de mesure (2, 20, 120, 220) adapté à déterminer une caractéristique physique dudit échantillon (11) en un point dudit échantillon (11), et
- un système de positionnement (3, 30, 230) adapté à positionner ledit instrument de mesure (2, 20, 120, 220) par rapport audit échantillon (11) à caractériser, en un point de mesure localisée dudit échantillon (11), ledit système de positionnement (3, 30, 230) comprenant:
- une mire de localisation (31) rendue solidaire dudit échantillon (11) et définissant un référentiel lié audit échantillon (11), ladite mire de localisation (31) étant gravée sur ou dans l'échantillon (11) à caractériser au moyen de techniques mécaniques ou photo-lithographiques, ou ladite mire de localisation (31) étant imprimée sur l'échantillon (11) par encrage ou sérigraphie ou ladite mire de localisation (31) comprenant un support souple ou rigide rapporté sur l'échantillon (11) pour rendre ledit support solidaire dudit échantillon (11) à caractériser,
- des moyens d'acquisition et d'analyse d'images comportant :
- des moyens d'éclairage (321) de ladite mire de localisation (31),
- un système d'imagerie optique (322), solidaire dudit instrument de mesure (2, 20, 120, 220), adapté à acquérir une image (31P) d'au moins une partie de ladite mire de localisation (31), et
- des moyens d'analyse d'images (33) adaptés à analyser l'image (31P) de ladite partie de la mire de localisation (31) pour déterminer la position et l'orientation dudit système d'imagerie optique (322) par rapport à ladite mire de localisation (31),
- des moyens de calibration (34, 34A) adaptés à déterminer la position relative dudit instrument de mesure (2, 20, 120, 220) par rapport audit système d'imagerie optique (322), et
- des moyens de traitement des résultats de l'analyse d'images et de la calibration (13) adaptés à déterminer la position absolue dudit point de mesure localisée dans ledit référentiel lié audit échantillon (11), ledit instrument de mesure (2, 20, 120, 220) étant positionné pour la mesure en ledit point de mesure localisée et ladite caractéristique physique dudit échantillon (11) étant déterminée par ledit instrument de mesure (2, 20, 120, 220) en ledit point de mesure localisée.

2. Dispositif de caractérisation (110) selon la revendication 1, comportant un autre instrument de mesure (120) adapté à déterminer une autre caractéristique physique dudit échantillon (11) en un point dudit échantillon (11), ledit système de positionnement (30) étant adapté à positionner ledit autre instrument de mesure (120) par rapport audit échantillon (11) en un deuxième point de mesure localisée dudit échantillon (11), ledit système d'imagerie optique (322) étant également solidaire dudit autre instrument de mesure (120), lesdits moyens de calibration (34, 34A) dudit système de positionnement (30) étant adaptés à déterminer la position relative dudit autre instrument de mesure (120) par rapport audit système d'imagerie optique (322), et lesdits moyens de traitement des résultats (13) étant adaptés à déterminer la position absolue dudit deuxième point de mesure localisée dans ledit référentiel lié audit échantillon (11), ladite autre caractéristique physique dudit échantillon (11) étant déterminée par ledit autre instrument de mesure (120) en ledit deuxième point de mesure.

3. Dispositif de caractérisation (210) selon la revendication 1, comportant un autre instrument de mesure (220) adapté à déterminer une autre caractéristique physique dudit échantillon (11) en un point dudit échantillon (11), ledit système de positionnement (230) étant adapté à positionner ledit autre instrument de mesure (220) par rapport audit échantillon (11) en un deuxième point de mesure localisée dudit échantillon (11) et comprenant un autre système d'imagerie optique (2322), solidaire dudit autre instrument de mesure (220), adapté à acquérir une autre image d'au moins une partie de ladite mire de localisation (31), lesdits moyens d'analyse d'images (233) étant adaptés à analyser ladite autre image de la partie de ladite mire de localisation (31) pour déterminer la position et l'orientation dudit autre système d'imagerie optique (2322) par rapport à ladite mire de localisation (31), lesdits moyens de calibration (34, 34A) dudit système de positionnement (230) étant adaptés à déterminer la position relative dudit autre instrument de mesure (220) par rapport audit autre système d'imagerie optique (2322), et lesdits moyens de traitement des résultats (13) étant adaptés à déterminer la position absolue dudit deuxième point de mesure localisée dans ledit référentiel lié audit échantillon (11), ladite autre caractéristique physique dudit échantillon (11) étant déterminée par ledit autre instrument de mesure (220) en ledit deuxième point de mesure.

4. Dispositif de caractérisation (210) selon la revendication 1, comportant un autre instrument de mesure (220) adapté à déterminer une autre caractéristique physique dudit échantillon (11) en un point dudit échantillon (11), ledit système de positionnement (230) étant adapté à positionner ledit autre instrument de mesure par rapport audit échantillon (11) en un deuxième point de mesure localisée dudit échantillon (11) et comprenant :
- un autre système d'imagerie optique (2322), solidaire dudit autre instrument de mesure (220), adapté à acquérir une autre image d'au moins une partie de ladite mire de localisation (31), lesdits moyens d'analyse d'images (233) étant adaptés à analyser ladite autre image de la partie de la mire de localisation (31) pour déterminer la position et l'orientation dudit autre système d'imagerie optique (2322) par rapport à ladite mire de localisation (31), et
- d'autres moyens de calibration adaptés à déterminer la position relative dudit autre instrument de mesure (220) par rapport audit autre système d'imagerie optique (2322), lesdits moyens de traitement des résultats (13) étant adaptés à déterminer la position absolue dudit deuxième point de mesure localisée dans ledit référentiel lié audit échantillon (11), ladite autre caractéristique physique dudit échantillon (11) étant déterminée par ledit autre instrument de mesure (220) en ledit deuxième point de mesure.

5. Dispositif de caractérisation (1, 10, 110, 210) selon l'une des revendications 1 à 4, dans lequel ladite mire de localisation (31) comporte des motifs micro- ou nano-structurés.

6. Dispositif de caractérisation (1, 10, 110, 210) selon l'une des revendications 1 à 5, dans lequel ladite mire de localisation (31) est formée d'une pluralité de cellules élémentaires (310) formant un pavage régulier à deux dimensions.

7. Dispositif de caractérisation (1, 10, 110, 210) selon la revendication 6, dans lequel chaque cellule élémentaire (310) comporte :
- un motif de positionnement (3101A2) indiquant la position de ladite cellule élémentaire (310) dans ledit référentiel lié audit échantillon (11), et
- un motif d'orientation (3101A1) indiquant l'orientation de ladite cellule élémentaire (310) dans ledit référentiel lié audit échantillon (11).

8. Dispositif de caractérisation (10, 110) selon l'une des revendications 1 à 4, pour un échantillon (11) sensiblement plan comportant une première face (11A) et une deuxième face (11B), dans lequel :
- ledit instrument de mesure (20, 120) comporte un microscope optique qui comprend un emplacement destiné à recevoir un condenseur lorsque ledit microscope optique est utilisé en trans-illumination,
- ladite mire de localisation (31) est rendue solidaire de ladite deuxième face (11B) dudit échantillon (11), ledit point de mesure localisée étant situé sur ladite première face (11A) dudit échantillon (11),
- ledit système d'imagerie optique (322) est agencé en lieu et place dudit condenseur.

9. Procédé de caractérisation d'un échantillon (11), au moyen d'un instrument de mesure (2, 20, 120, 220) adapté à déterminer une caractéristique physique en un point dudit échantillon (11), comportant des étapes consistant à :
a) déterminer la position relative dudit instrument de mesure (2, 20, 120, 220) par rapport à un système d'imagerie optique (322, 2322), solidaire dudit instrument de mesure (2, 20, 120, 220),
b) placer l'échantillon (11) à caractériser en conditions pour être mesuré par ledit instrument de mesure (2, 20, 120, 220) en un point de mesure localisée dudit échantillon (11), une mire de localisation (31) ayant été rendue solidaire dudit échantillon (11), ladite mire de localisation (31) définissant un référentiel lié audit échantillon (11), ladite mire de localisation (31) étant gravée sur ou dans l'échantillon (11) à caractériser au moyen de techniques mécaniques ou photo-lithographiques, ou ladite mire de localisation (31) étant imprimée sur l'échantillon (11) par encrage ou sérigraphie ou ladite mire de localisation (31) comprenant un support souple ou rigide rapporté sur l'échantillon (11) pour rendre ledit support solidaire dudit échantillon (11) à caractériser ;
c) éclairer ladite mire de localisation (31) et acquérir, au moyen dudit système d'imagerie optique (322, 2322), une image (31P) d'au moins une partie de ladite mire de localisation (31),
d) déterminer, à partir de l'analyse de l'image (31P) de ladite partie de la mire de localisation (31), la position et l'orientation dudit système d'imagerie optique (322, 2322) par rapport à ladite mire de localisation (31), et
e) déduire des étapes a) et d) la position absolue dudit point de mesure localisée dans ledit référentiel lié audit échantillon (11) lorsque ledit instrument de mesure (2, 20, 120, 220) est positionné pour la mesure en ledit point de mesure localisée, de manière à déterminer ladite caractéristique physique dudit échantillon (11) par ledit instrument de mesure (2, 20, 120, 220) en ledit point de mesure localisée.

## Patentansprüche

1. Vorrichtung (1, 10, 110, 210) zum Charakterisieren einer Probe (11) mit
- einem Meßinstrument (2, 20, 120, 220), das dazu ausgelegt ist, eine physikalische Eigenschaft der Probe (11) an einem Punkt der Probe (11) zu bestimmen, und
- einem Positionierungssystem (3, 30, 230), das dazu ausgelegt ist, das Meßinstrument (2, 20, 120, 220) in Bezug auf die zu charakterisierende Probe (11) an einem Punkt lokalisierter Messung der Probe (11) zu positionieren, wobei das Positionierungssystem (3, 30, 230)
- ein Lokalisierungsziel (31), das mit der Probe (11) fest verbunden worden ist und einen an die Probe (11) gebundenen Bezugspunkt definiert, wobei das Lokalisierungsziel (31) auf der oder in die zu charakterisierende Probe (11) mit mechanischen oder fotolithografischen technischen Mitteln eingraviert ist oder das Lokalisierungsziel (31) mit Tinte oder Siebdruck auf die Probe (11) aufgedruckt ist oder das Lokalisierungsziel (31) eine weiche oder steife an der Probe (11) angebrachte Unterlage aufweist, um die Unterlage mit der zu charakterisierenden Probe (11) fest zu verbinden,
- Mittel zum Aufnehmen und Analysieren von Bildern mit
- Mitteln (321) zum Beleuchten des Lokalisierungsziels (31),
- einem optischen Bildsystem (322), das mit dem Meßinstrument (2, 20, 120, 220) fest verbunden ist und dazu ausgelegt ist, ein Bild (31P) wenigstens eines Teils des Lokalisierungsziels (31) aufzunehmen, und
- Bildanalysemitteln (33), die dazu ausgelegt sind, das Bild (31P) des Teils des Lokalisierungsziels (31) zu analysieren, um die Position und Orientierung des optischen Bildsystems (322) in Bezug auf das Lokalisierungsziel (31) zu bestimmen,
- Kalibriermittel (34, 34A), die dazu ausgelegt sind, die relative Position des Meßinstruments (2, 20, 120, 220) in Bezug auf das optische Bildsystem (322) zu bestimmen, und
- Mittel (13) zum Verarbeiten der Resultate der Bildanalyse und zum Kalibrieren, die dazu ausgelegt sind, die in dem mit der Probe (11) verbundenen Bezugspunkt lokalisierte absolute Position des Meßpunkts zu bestimmen, wobei das Meßinstrument (2, 20, 120, 220) für die Messung im Punkt lokalisierter Messung positioniert ist und die physikalische Eigenschaft der Probe (11) durch das Meßgerät (2, 20, 120, 220) im Punkt lokalisierter Messung bestimmt wird, aufweist.

2. Charakterisierungsvorrichtung (110) gemäß Anspruch 1, die ein weiteres Meßgerät (120) aufweist, das dazu ausgelegt ist, eine weitere physikalische Eigenschaft der Probe (11) an einem Punkt der Probe (11) zu bestimmen, wobei das Positionierungssystem (30) dazu ausgelegt ist, das weitere Meßinstrument (120) in Bezug auf die Probe (11) an einem zweiten Punkt lokalisierter Messung der Probe (11) zu positionieren, wobei das optische Bildsystem (322) ebenfalls mit dem weiteren Meßinstrument fest verbunden ist, wobei die Kalibriermittel (34, 34A) des Positionierungssystems (30) dazu ausgelegt sind, die relative Position des weiteren Meßinstruments (120) in Bezug auf das optische Bildsystem (322) zu bestimmen, und wobei die Mittel (13) zum Verarbeiten der Resultate dazu ausgelegt sind, die absolute Position des zweiten Punkts lokalisierter Messung im mit der Probe (11) verbundenen Bezugspunkt zu bestimmen, wobei die weitere physikalische Eigenschaft der Probe (11) durch das weitere Meßinstrument (120) am zweiten Meßpunkt bestimmt wird.

3. Charakterisierungsvorrichtung (210) gemäß Anspruch 1, die ein weiteres Meßgerät (220) aufweist, das dazu ausgelegt ist, eine weitere physikalische Eigenschaft der Probe (11) an einem Punkt der Probe (11) zu bestimmen, wobei das Positionierungssystem (230) dazu ausgelegt ist, das weitere Meßinstrument (220) in Bezug auf die Probe (11) an einem zweiten Punkt lokalisierter Messung der Probe (11) zu positionieren, und ein weiteres optisches Bildsystem (2322) aufweist, das mit dem weiteren Meßinstrument fest verbunden ist und dazu ausgelegt ist, ein weiteres Bild von wenigstens einem Teil des Lokalisierungsziels (31) aufzunehmen, wobei die Bildanalysemittel (233) dazu ausgelegt sind, das weitere Bild des Teils des Lokalisierungsziels (31) zu analysieren, um die Position und die Orientierung des weiteren optischen Bildsystems (2322) in Bezug auf das Lokalisierungsziel (31) zu bestimmen, wobei die Kalibriermittel (34, 34A) des Positionierungssystems (230) dazu ausgelegt sind, die relative Position des weiteren Meßinstruments (220) in Bezug auf das optische Bildsystem (2322) zu bestimmen, und wobei die Mittel (13) zum Verarbeiten der Resultate dazu ausgelegt sind, die absolute Position des zweiten Punkts lokalisierter Messung im mit der Probe (11) verbundenen Bezugspunkt zu bestimmen, wobei die weitere physikalische Eigenschaft der Probe (11) durch das weitere Meßinstrument (220) am zweiten Meßpunkt bestimmt wird.

4. Charakterisierungsvorrichtung (210) gemäß Anspruch 1, die ein weiteres Meßgerät (220) aufweist, das dazu ausgelegt ist, eine weitere physikalische Eigenschaft der Probe (11) an einem Punkt der Probe (11) zu bestimmen, wobei das Positionierungssystem (230) dazu ausgelegt ist, das weitere Meßinstrument in Bezug auf die Probe (11) an einem zweiten Punkt lokalisierter Messung der Probe (11) zu positionieren, und
- ein weiteres optisches Bildsystem (2322), das mit dem weiteren Meßinstrument (220) fest verbunden ist und dazu ausgelegt ist, ein weiteres Bild von wenigstens einem Teil des Lokalisierungsziels (31) aufzunehmen, wobei die Bildanalysemittel (233) dazu ausgelegt sind, das weitere Bild des Teils des Lokalisierungsziels (31) zu analysieren, um die Position und die Orientierung des weiteren optischen Bildsystems (2322) in Bezug auf das Lokalisierungsziel (31) zu bestimmen, und
- weitere Kalibriermittel, die dazu ausgelegt sind, die relative Position des weiteren Meßinstruments (220) in Bezug auf das weitere optische Bildsystem (2322) zu bestimmen,
aufweist,
wobei die Mittel (13) zum Verarbeiten der Resultate dazu ausgelegt sind, die absolute Position des zweiten Punkts lokalisierter Messung im mit der Probe (11) verbundenen Bezugspunkt zu bestimmen, wobei die weitere physikalische Eigenschaft der Probe (11) durch das weitere Meßinstrument (220) am zweiten Meßpunkt bestimmt wird.

5. Charakterisierungsvorrichtung (1, 10, 110, 210) gemäß einem der Ansprüche 1 bis 4, bei der das Lokalisierungsziel (31) mikro- oder nanostrukturierte Motive aufweist.

6. Charakterisierungsvorrichtung (1, 10, 110, 210) gemäß einem der Ansprüche 1 bis 5, bei der das Lokalisierungsziel (31) aus einer Anzahl Elementarzellen (310) gebildet ist, die einen regelmäßigen zweidimensionalen Besatz bilden.

7. Charakterisierungsvorrichtung (1, 10, 110, 210) gemäß Anspruch 6, bei der jede Elementarzelle (310)
- ein Positionierungsmotiv (3101A2), das die Position der Elementarzelle (310) im mit der Probe (11) verbundenen Bezugspunkt angibt, und
- ein Orientierungsmotiv (3101A1), das die Orientierung der Elementarzelle (310) im mit der Probe (11) verbundenen Bezugspunkt angibt,
aufweist.

8. Charakterisierungsvorrichtung (10, 110) gemäß einem der Ansprüche 1 bis 4 für eine im Wesentlichen ebene Probe (11), die eine erste Seite (11A) und eine zweite Seite (11B) aufweist, wobei
- das Meßinstrument (20, 120) ein optisches Mikroskop aufweist, das einen Platz aufweist, der dazu bestimmt ist, einen Kondensor aufzunehmen, wenn das optische Mikroskop im Durchlicht verwendet wird,
- das Lokalisierungsziel (31) mit der zweiten Seite (11B) der Probe (11) verbunden ist, wobei der Punkt lokalisierter Messung auf der ersten Seite (11A) der Probe (11) liegt,
- das optische Bildsystem (322) an der Stelle des Kondensors angeordnet ist.

9. Verfahren zum Charakterisieren einer Probe (11) mittels eines Meßinstruments (2, 20, 120, 220), das dazu ausgelegt ist, eine physikalische Eigenschaft an einem Punkt der Probe (11) zu bestimmen, wobei das Verfahren Schritte aufweist, die darin bestehen:
a) die relative Position des Meßinstruments (2, 20, 120, 220) in Bezug auf ein mit dem Meßinstrument (2, 20, 120, 220) fest verbundenes optisches Bildsystem (322, 2322) zu bestimmen,
b) die zu charakterisierende Probe (11) in die Lage zu versetzen, mit dem Meßinstrument (2, 20, 120, 220) an einem Punkt lokalisierter Messung der Probe (11) vermessen zu werden, wobei ein Lokalisierungsziel (31) mit der Probe (11) fest verbunden worden ist, wobei das Lokalisierungsziel (31) einen an die Probe (11) gebundenen Bezugspunkt definiert, wobei das Lokalisierungsziel (31) auf der oder in die zu charakterisierende Probe (11) mit mechanischen oder fotolithografischen Techniken eingraviert ist oder das Lokalisierungsziel (31) mit Tinte oder Siebdruck auf die Probe (11) aufgedruckt ist oder das Lokalisierungsziel (31) eine weiche oder steife an der Probe (11) angebrachte Unterlage aufweist, um die Unterlage mit der zu charakterisierenden Probe (11) fest zu verbinden,
c) das Lokalisierungsziel (31) zu beleuchten und mittels des optischen Bildsystems (322, 2322) ein Bild (31P) wenigstens eines Teils des Lokalisierungsziels (31) aufzunehmen,
d) von der Analyse des Bilds (31P) des Teils des Lokalisierungsziels (31) ausgehend, die Position und Orientierung des optischen Bildsystems (322, 2322) in Bezug auf das Lokalisierungsziel (31) zu bestimmen, und
e) aus den Schritten a) und d) die absolute Position des Punkts lokalisierter Messung in dem mit der Probe (11) verbundenen Bezugspunkt abzuleiten, wenn das Meßinstrument (2, 20, 120, 220) für die Messung an dem Punkt lokalisierter Messung positioniert ist, um die physikalische Eigenschaft der Probe (11) durch das Meßinstrument (2, 20, 120, 220) an dem Punkt lokalisierter Messung zu bestimmen.

## Claims

1. A device (1, 10, 110, 210) for characterizing a sample (11) including:
- a measuring instrument (2, 20, 120, 220) adapted to determine a physical characteristic of said sample (11) at one point of said sample (11), and
- a positioning system (3, 30, 230) adapted to position said measuring instrument (2, 20, 120, 220) in relation to said sample (11) to be characterized, at one localized measurement point of said sample (11),
said positioning system (3, 30, 230) comprising:
- a localization target (31) made integral with said sample (11) and defining a referential system linked to said sample (11), said localization target (31) being engraved on or in the sample (11) through mechanical or photolithographic techniques, or said localization target (31) being printed on the sample (11) by inking or serigraphy or said localization target (31) comprising a flexible or rigid support added on the sample (11) to make said support integral with said sample (11) to be characterized,
- image acquisition and analysis means including:
- means (321) for illuminating said localization target (31),
- an optical imaging system (322), integral with said measuring instrument (2, 20, 120, 220), adapted to acquire an image (31P) of at least one portion of said localization target (31), and
- image analysis means (33) adapted to analyse the image (31P) of said portion of the localization target (31) to determine the position and orientation of said optical imaging system (322) in relation to said localization target (31),
- calibration means (34, 34A) adapted to determine the relative position of said measuring instrument (2, 20, 120, 220) in relation to said optical imaging system (322), and
- means (13) for processing the results of the image analysis and of the calibration, adapted to determine the absolute position of said localized measurement point in said referential system linked to said sample (11), said measuring instrument (2, 20, 120, 220) being positioned for the measurement at said localized measurement point and said physical characteristic of said sample (11) being determined by said measuring instrument (2, 20, 120, 220) at said localized measurement point.

2. The characterization device (110) according to claim 1, including another measuring instrument (120) adapted to determine another physical characteristic of said sample (11) at one point of said sample (11), said positioning system (30) being adapted to position said other measuring instrument (120) in relation to said sample (11) at a second localized measurement point of said sample (11), said optical imaging system (322) being also integral with said other measuring instrument (120), said calibration means (34, 34A) of said positioning system (30) being adapted to determine the relative position of said other measuring instrument (120) in relation to said optical imaging system (322), and said result processing means (13) being adapted to determine the absolute position of said second localized measurement point in said referential system linked to said sample (11), said other physical characteristics of said sample (11) being determined by said other measuring instrument (120) at said second measurement point.

3. The characterization device (210) according to claim 1, including another measuring instrument (220) adapted to determine another physical characteristic of said sample (11) at one point of said sample (11), said positioning system (230) being adapted to position said other measuring instrument (220) in relation to said sample (11) at a second localized measurement point of said sample (11) and comprising another optical imaging system (2322), integral with said other measuring instrument (220), adapted to acquire another image of at least one portion of said localization target (31), said image analysis means (233) being adapted to analyse said other image of the portion of said localization target (31) to determine the position and orientation of said other optical imaging system (2322) in relation to said localization target (31), said calibration means (34, 34A) of said positioning system (230) being adapted to determine the relative position of said other measuring instrument (220) in relation to said other optical imaging system (2322), and said result processing means (13) being adapted to determine the absolute position of said second localized measurement point in said referential system linked to said sample (11), said other physical characteristic of said sample (11) being determined by said other measuring instrument (220) at said second measurement point.

4. The characterization device (210) according to claim 1, including another measuring instrument (220) adapted to determine another physical characteristic of said sample (11) at one point of said sample (11), said positioning system (230) being adapted to position said other measuring instrument in relation to said sample (11) at a second localized measurement point of said sample (11) and comprising;
- another optical imaging system (2322), integral with said other measuring instrument (220), adapted to acquire another image of at least one portion of said localization target (31), said image analysis means (233) being adapted to analyse said other image of the portion of the localization target (31) to determine the position and orientation of said other optical imaging system (2322) in relation to said localization target (31), and
- other calibration means adapted to determine the relative position of said other measuring instrument (220) in relation to said other optical imaging system (2322), said result processing means (13) being adapted to determine the absolute position of said second localized measurement point in said referential system linked to said sample (11), said other physical characteristic of said sample (11) being determined by said other measuring instrument (220) at said second measurement point.

5. The characterization device (1, 10, 110, 210) according to one of claims 1 to 4, wherein said localization target (31) includes micro- or nanostructured patterns.

6. The characterization device (1, 10, 110, 210) according to one of claims 1 to 5, wherein said localization target (31) is formed of a plurality of elementary cells (310) forming a regular two-dimensional pavement.

7. The characterization device (1, 10, 110, 210) according to claim 6, wherein each elementary cell (310) includes:
- a positioning pattern (3101A2) indicating the position of said elementary cell (310) in said referential system linked to said sample (11), and
- an orientation pattern (3101A1) indicating the orientation of said elementary cell (310) in said referential system linked to said sample (11).

8. The characterization device (10, 110) according to one of claims 1 to 4, for a substantially planar sample (11) including a first face (11A) and a second face (11B), wherein:
- said measuring instrument (20, 120) includes an optical microscope that comprises a place intended to receive a condenser when said optical microscope is used in trans-illumination mode,
- said localization target (31) is then made integral with said second face (11B) of said sample (11), said localized measurement point being located on said first face (11A) of said sample (11),
- said optical imaging system (322) being arranged at the place of said condenser.

9. A method for characterizing a sample (11), by means of a measuring instrument (2, 20, 120, 220) adapted to determine a physical characteristic at one point of said sample (11), including steps consisting in:
a) determining the relative position of said measuring instrument (2, 20, 120, 220) in relation to an optical imaging system (322, 2322), integral with said measuring instrument (2, 20, 120, 220),
b) placing the sample (11) to be **characterized in** such conditions to be measured by said measuring instrument (2, 20, 120, 220) at one localized measurement point of said sample (11), wherein a localization target (31) has been made integral with said sample (11), said localization target (31) defining a referential system linked to said sample (11), said localization target (31) being engraved on or in the sample (11) to be characterized through mechanical or photolithographic techniques, or said localization target (31) being printed on the sample (11) by inking or serigraphy or said localization target (31) comprising a flexible or rigid support added on the sample (11) to make said support integral with said sample (11) to be characterized;
c) illuminating said localization target (31) and acquiring, by means of said optical imaging system (322, 2322), an image (31P) of at least one portion of said localization target (31),
d) determining, from the analysis of the image (31P) of said portion of the localization target (31), the position and orientation of said optical imaging system (322, 2322) in relation to said localization target (31), and
e) deducing from steps a) and d) the absolute position of said localized measurement point in said referential system linked to said sample (11), when said measuring instrument (2, 20, 120, 220) is positioned for the measurement at said localized measurement point, so as to determine said physical characteristic of said sample (11) by said measuring instrument (2, 20, 120, 220) at said localized measurement point.
